# EUROPÄISCHE PATENTSCHRIFT

(11) **EP 1 194 264 B1**
(45) Veröffentlichungstag und Bekanntmachung des Hinweises auf die Patenterteilung: **17.09.2003**
(21) Anmeldenummer: 00944016.5
(22) Anmeldetag: 07.07.2000
(51) Int. Cl.: B23P 19/06, F16B 37/06

(54) **VERFAHREN ZUR ANBRINGUNG EINES FUNKTIONSELEMENTES; MATRIZE; FUNKTIONSELEMENT; ZUSAMMENBAUTEIL UND STEMPELANORDNUNG**
METHOD FOR PLACING A FUNCTIONAL ELEMENT; DIE, FUNCTIONAL ELEMENT; ASSEMBLY ELEMENT AND DIE ARRANGEMENT
PROCEDE POUR PLACER UN ELEMENT FONCTIONNEL; MATRICE; ELEMENT FONCTIONNEL; ELEMENT ASSEMBLE ET ENSEMBLE POINCON

(30) Priorität: 09.07.1999 DE 19932023; 30.07.1999 DE 19935923; 16.04.2000 DE 10018715
(43) Veröffentlichungstag der Anmeldung: 10.04.2002
(73) Patentinhaber: Profil Verbindungstechnik GmbH & Co. KG, 61381 Friedrichsdorf (DE)
(72) Erfinder: BABEJ, Jiri, D-35423 Lich (DE)
(74) Vertreter: Manitz, Finsterwald & Partner GbR
(86) Internationale Anmeldenummer: EP0006468
(87) Internationale Veröffentlichungsnummer: WO01003881

(56) Entgegenhaltungen:
- EP-A- 0 028 019
- EP-A- 0 686 458
- WO-A-93/10925
- DE-A- 19 647 831
- GB-A- 1 532 437
- GB-A- 2 152 862
- US-A- 3 624 867
- US-A- 4 064 617
- US-A- 4 574 453
- US-A- 5 339 509

## Beschreibung

Die Erfindung betrifft ein Verfahren nach dem Oberbegriff von Anspruch 1 zur insbesondere flüssigkeits- und/oder gasdichten Anbringung eines Funktionselementes, insbesondere eines Befestigungselementes, an einem Blechteil.

Des weiteren betrifft die Erfindung eine Matrize nach Anspruch 13 und ein Funktionselement nach Anspruch 23, die in dem erfindungsgemäßen Verfahren verwendet werden können, sowie ein durch das erfindungsgemäße Verfahren herstellbares Zusammenbauteil nach Anspruch 31 und eine Stempelanordnung in Kombination mit einer Matrize nach Anspruch 40.

Funktionselemente wie beispielsweise Muttern und Bolzen, werden z.B. im Automobilbau an Blechteilen angebracht, um die verschiedensten Bauteile mit den Blechteilen verbinden zu können.

Aus der DE 196 47 831 A1 ist ein Verfahren der eingangs genannten Art zur Anbringung eines Funktionselementes an einem Blechteil bekannt, bei dem mittels einer einteiligen Umformmatrize, gegen die das Funktionselement unter Zwischenlage des Blechteils gepreßt wird, Blechmaterial mit einem Hinterschneidungsmerkmal des Funktionselementes verhakt wird.

Des weiteren ist es bekannt, Bleche ohne Verwendung zusätzlicher Verbindungselemente dadurch miteinander zu verbinden, daß die Bleche auf eine Matrize gedrückt und mittels eines Stempels in Richtung eines feststehenden Ambosses gezogen werden. Bewegliche Lamellen der Matrize, die seitlich des Ambosses angeordnet sind, geben nach und bewegen sich radial nach außen, wenn das untere Blechteil den Amboß erreicht. Dadurch entsteht ein die Bleche miteinander verriegelnder runder Kragen.

Aufgabe der Erfindung ist es, ein Verfahren der eingangs genannten Art sowie eingangs genannte Vorrichtungen, d.h. eine Matrize, ein Funktionselement, ein aus einem Blechteil und einem daran angebrachtem Funktionselement bestehenden Zusammenbauteil sowie eine Stempelanordnung zu schaffen, die eine möglichst einfach herstellbare und gute Verbindung zwischen einem Blechteil und einem Funktionselement gewährleisten.

Gelöst wird diese Aufgabe nach der Erfindung verfahrensmäßig dadurch, daß bei gleichzeitiger Verformung des hohlen Kopfteils und Umformung des Blechteils in einen durch Formteile der Matrize definierten zylindrischen Umformraum, der einen Boden aufweist, das Blechmaterial in eine durch Verformung des Kopfteils ausgebildete Hinterschneidung hineingeformt wird, wobei die Formteile bei der Umformung unbeweglich gehalten werden, jedoch zur Herausnahme des am Blechteil angebrachten Funktionselements aus der Matrize teilweise herausgehoben werden.

Erfindungsgemäß erfolgt die Anbringung des Funktionselementes an dem Blechteil durch umformtechnisches Fügen, bei der die Hinterschneidung nicht von vorne herein im Kopfteil des Funktionselements vorhanden ist, sondern erst bei der Anbringung desselben durch Verformung des Kopfteils entsteht. Obwohl bei diesem Verfahren sowohl das Blechteil als auch das Funktionselement eine erhebliche Verformung erfahren, gelingt es in überraschender Weise ein preisgünstiges und zuverlässiges Verfahren zu schaffen, das für eine qualitativ hochwertige Verbindung zwischen dem Blechteil und das Funktionselement sorgt und so ausgeführt werden kann, daß das Blechteil nicht durchlocht wird.

Hierdurch ist das Blechteil auch im Anschluß an das Anbringen des Funktionselementes nach wie vor absolut flüssigkeits- und/oder gasdicht und kann daher auch in Umgebungen, in denen derartige Eigenschaften unverzichtbar sind, eingesetzt werden.

Es ist allerdings auch möglich mit einem vorgelochten Blechteil zu arbeiten sofern das Funktionselement dies erfordert oder sinnvoll macht, bspw. wenn das Funktionselement als Mutterelement realisiert werden soll, was grundsätzlich möglich ist.

An dieser Stelle soll kurz auf die US-A-4,064,617 hingewiesen werden, bei der ein in Draufsicht quadratisches Mutterelement in ein Blechteil unter Anwendung einer Matrize mit beweglichen Formteilen eingebracht wird. Hier entsteht keine gasdichte oder flüssigkeitsdichte Verbindung. Weiterhin definieren die Formteile keinen zylindrischen Umformraum mit Boden.

Die erfindungsgemäßen Funktionselemente können entweder in an sich bekannter Weise durch Kaltschlagen oder durch andere preisgünstige Verfahren hergestellt werden.

Die Formteile der Matrize bleiben bei der Umformung in einer festen Position, sind jedoch für die Herausnahme des Blechteils mit dem angebrachten Funktionselement beweglich gelagert. Sie können als Verschleißteile kostengünstig ausgewechselt werden, ohne die gesamte Matrize austauschen zu müssen. Die Matrizen lassen sich außerdem kostengünstig herstellen.

Eine bevorzugte Matrize zur Durchführung des Verfahrens zeichnet sich durch folgende Merkmale aus:
durch einen hohlen Körper mit einer zur Abstützung eines Blechteils vorgesehenen Stirnseite, die über eine sich konusförmig verjüngende Wand in einen ein Anschlagelement aufnehmenden Raum übergeht, wobei das Anschlagelement zur Bildung eines im Querschnitt keilförmigen Ringspalts von der sich konusförmig verjüngenden Wand beabstandet ist und die der Stirnseite des hohlen Körpers zugewandte Stirnseite des Anschlagelements von der Stirnseite des hohlen Körpers zurückversetzt ist und einen von einer Ringfläche umgebenen, kuppelartigen Vorsprung aufweist, und weiter durch mehrere, bevorzugt von zwei bis acht, insbesondere von vier, vorzugsweise baugleiche Formteile, die um die Längsachse der Matrize herum in den keilförmigen Ringspalt angeordnet sind und sowohl an der konusförmigen Wand als auch am Anschlagelement abgestützt sind, sowie durch einen zwischen den Formteilen und dem zurückversetzten Stirnende des Anschlagelements gebildeten Umformraum in den Formvorsprünge der Formteile hineinragen.

Das erfindungsgemäße Funktionselement ist im Anspruch 23 definiert. An dieser Stelle ist zu erwähnen, dass ein Funktionselement aus einem Schaftteil und einem für eine Nietverbindung mit einem Tafelelement, insbesondere einem Blechteil ausgelegtem Kopfteil besteht, bei dem mindestens das Kopfteil hohl ausgebildet ist und vorzugsweise den gleichen Außendurchmesser wie das Schaftteil aufweist, aus der EP-A-0028109 bekannt ist. Dieses Element hat aber nicht das besondere Merkmal wonach das hohle Kopfteil an seinem dem Schaftteil abgewandten Stirnende eine im wesentlichen teilsphärische Abrundung aufweist, die in einer im wesentlichen kreisförmigen stirnseitigen Öffnung endet, welche vorzugsweise in einer Ebene senkrecht zur Längsachse des Funktionselementes angeordnet ist. Im übrigen wird die Verformung des Funktionselements nach der EP-A-0028109 anderweitig vorgenommen, und zwar unter Anwendung eines vorgelochten Blechteils.

Das erfindungsgemäß hergestellte Zusammenbauteil sieht so aus, daß ein hohles Kopfteil des Funktionselementes verformt ist, um zwei radial nach außen vorspringenden, voneinander beabstandeten Ringwülste zubilden, zwischen denen eine Hinterschneidung vorliegt, in der das Blechmaterial formschlüssig aufgenommen ist und das Blechteil in die Hinterschneidung des Funktionselementes hinein erstreckt.

Weiterhin befaßt sich die vorliegende Erfindung mit einer besonderen Stempelanordnung in Verbindung mit einer Matrize nach Anspruch 1 die insbesondere dafür ausgelegt ist, das Einsetzen von Funktionselementen durchzuführen ohne die Gefahr das Schaftteil und insbesondere dessen Gewindezylinder zu verformen. Zu diesem Zweck zeichnet sich die erfindungsgemäße Stempelanordnung durch die folgenden Merkmalen aus,
- durch einen Außenstempel,
- durch einen Innenstempel, der innerhalb eines Stempelkanals des Außenstempels in Bezug auf den Außenstempel zwischen einer Aufnahmeposition für das Funktionselement und einer Einsetzposition für das Funktionselement verschiebbar angeordnet ist, wobei in der Aufnahmeposition das Funktionselement vorzugsweise von der Seite in den Stempelkanal einführbar ist und in der Einsetzposition das Kopfteil des Funktionselements aus der Stempelanordnung herausragt und
- durch mindestens zwei vom Außenstempel getragenen Segmente die an einer inneren Seite vorzugsweise Formmerkmale aufweisen, die in die Formmerkmale des Schaftteils des Funktionselements eingreifen können und welche zwischen eine geöffnete Position entfernt vom Schaftteil des Funktionselements und eine geschlossene Position in Eingriff mit den Formmerkmalen des Schaftteils bewegbar sind.

Weitere bevorzugte Ausführungsformen des erfindungsgemäßen Verfahrens sowie der erfindungsgemäßen Matrize, des erfindungsgemäßen Funktionselements, des erfindungsgemäßen Zusammenbauteils und der erfindungsgemäßen Stempelanordnung, die jeweils zu der Lösung der der Erfindung zugrundeliegenden Aufgabe beitragen, sind in den Ansprüchen, der Beschreibung sowie der Zeichnung angegeben.

Die Erfindung wird im folgenden anhand von Ausführungsbeispielen unter Bezugnahme auf die Zeichnung beschrieben. Es zeigen:
- Fig. 1: eine in Längsrichtung teilweise geschnittene Ausführungsform eines Funktionselementes, das mittels des erfindungsgemäßen Verfahrens an einem Blechteil anbringbar ist,
- Fig. 2: das Funktionselement der Figur 1 und das Blechteil nach der Anbringung des Elementes am Blechteil,
- Fig. 3: eine erfindungsgemäße Ausführungsform einer Matrize zur Durchführung des erfindungsgemäßen Verfahrens in einer teilweise in Längsrichtung geschnittenen Darstellung nach der Schnittebene III-III der Fig. 4
- Fig. 4: die Matrize von Fig. 3 in einer Draufsicht,
- Fig. 5A-5H: eine Reihenfolge von Zeichnungen, welche verschiedene Stadien des erfindungsgemäsen Fügeverfahrens darstellen und jeweils eine in Längsrichtung geschnittene Ansicht durch das in einem Setzkopf angeordnete Funktionselement und die Matrize gemäß Figur 3 und 4 zeigen und
- Fig. 6A-6C: eine Reihenfolge von Zeichnungen zur Erläuterung eine besonders bevorzugte Ausführungsform einer erfindungsgemäßen Stempelanordnung.

Die Anbringung eines Funktionselementes an ein Blechteil erfolgt heutzutage in der Blechverarbeitung normalerweise mittels einer Presse oder eines Roboters durch Zusammenwirken eines Setzkopfes mit einer Matrize. Dabei wird die Matrize z. B. in einem unteren Werkzeug einer Presse aufgenommen, während der Setzkopf an einem oberen Pressenwerkzeug oder an einer Zwischenplatte der Presse angebracht ist. Auch andere Anbringungsmöglichkeiten sind gegeben. Beispielsweise kann die Matrize an der Zwischenplatte der Presse und der Setzkopf am oberen Werkzeug der Presse angebracht werden. Auch sind umgekehrte Anordnungen denkbar, bei denen die Matrize im oberen und der Setzkopf im unteren Werkzeug der Presse oder an der Zwischenplatte angebracht wird. Im übrigen ist es nicht zwingend erforderlich, daß die Matrize und der Setzkopf sich in einer Presse befinden, sie könnten beispielsweise gegeneinander und voneinander weg durch einen Roboter bewegt werden oder Teile eines andersartigen Werkzeuges darstellen.

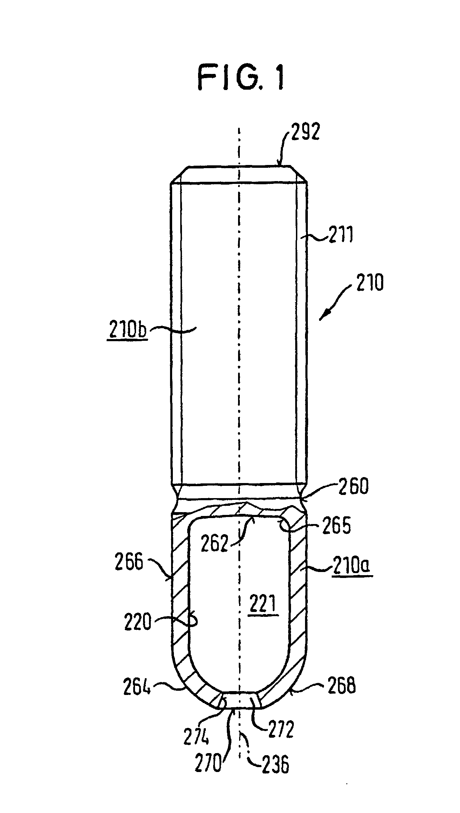

In an sich bekannter Weise verfügt der jeweils verwendete Setzkopf oder das damit zugeordnetes Werkzeug über einen häufig rohrförmigen Niederhalter, der das Blechteil gegen die unbewegliche Stirnseite der Matrize oder gegen die Oberseite des die jeweilige Matrize aufnehmende Werkzeug klemmt. Eine besonders bevorzugte Ausführungsform des erfindungsgemäßen Funktionselementes sowie der Matrize und des Verfahrens zur Einbringung dieses Elementes wird nunmehr im Bezug auf die Figuren 1 bis 6 beschrieben.

Figur 1 zeigt zunächst ein Funktionselement 210, hier in Form eines Bolzenelements mit einem ein Gewinde 211 aufweisendes Schaftteil 210b und einem hohlen Kopfteil 210a mit zumindest im wesentlichen dem gleichen Außendurchmesser wie das Schaftteil 210b. Es wird darauf hingewiesen, daß das Schaftteil 210b nicht zwangsweise mit einem Gewinde 211 ausgeführt werden muß, sondern wie bisher eine hiervon abweichende, nach Belieben wählbare Ausbildung zum Erreichen der jeweils vorgesehenen Funktion aufweisen kann. Beispielsweise kann das Schaftteil 210b als glatter Führungszapfen oder als Teppichbefestigungsstift mit einer eine Schnappverbindung mit einer Teppichöse ermöglichenden Ringnut ausgebildet werden. Besonders günstig bei diesem Element ist unter anderem, daß das Schaftteil 210b und das Kopfteil 210a zumindest im wesentlichen den gleichen Außendurchmesser aufweisen, so daß das Funktionselement aus Stangen- oder Drahtmaterial oder aus einem Rohrprofil kostengünstig herstellbar ist. Es ist jedoch nicht zwingend erforderlich, daß das Schaftteil 210b und das Kopfteil 210a den gleichen Durchmesser aufweisen, sondern es können auch erhebliche Durchmesserunterschiede vorliegen, wobei dies jedoch im allgemeinen einen größeren Aufwand bei der Herstellung des Elementes bedeutet. Mit anderen Worten könnte der Außendurchmesser des Schaftteils großer oder kleiner sein als der des Kopfteils.

Wie aus Figur 1 ersichtlich, weist das Kopfteil 210a eine Zylinderbohrung 220 auf, welche einen kreiszylindrischen Raum 221 bildet und beispielsweise entweder durch einen Bohrer oder durch ein Kaltschlagverfahren hergestellt werden kann. In diesem Beispiel endet der Raum 221 in Richtung des Schaftteils 210b hingehend kurz vor der die Grenze zum Schaftteil 210b darstellende Ringnut 260, und zwar in einer senkrecht zur Längsachse stehenden Querwand 262, die leicht konkav ausgebildet ist und über sanfte Radien 265 in die Wandung 266. Alternativ hierzu kann die Querwand eine ebene oder eine konusförmige Vertiefung 262 aufweisen. Dies ist allerdings nicht zwingend erforderlich. Sollte das Element aus Rohrmaterial hergestellt werden, würde sich die Bohrung 220 auch durch das Schaftteil 210b hindurch erstrecken, wobei jedoch der Durchmesser der Bohrung 220 im Bereich des Schaftteils 210b dann vorzugsweise deutlich kleiner sein sollte als der Durchmesser der Bohrung 220 im Kopfteil 210a, damit nur der Kopfteil des Funktionselements während der Anbringung am Blechteil 212 verformt wird.

An dem dem Schaftteil 210b abgewandten Endbereich 264 verjüngt sich die bisherige kreiszylinderförmige Ringwand 266 des Kopfteils 210a zu einer abgerundeten geschoßähnlichen Ausbildung oder Zigarrenform 268, wobei das Stirnende 270 nicht geschlossen sondern offen ist und eine Öffnung 272 definiert, die deutlich kleiner ist als der Durchmesser der Zylinderbohrung 220. Der Endbereich 264 des Funktionselementes 210 ist sozusagen sphärisch abgerundet mit einer flachen, offenen Stirnseite 270. Wie aus Figur 1 ersichtlich, ist der hohle Endbereich 264 des Elementes zwischen der Stirnseite 270 und der Öffnung 272 kegelstumpfartig ausgebildet, und zwar so, daß der Endbereich 264 des Kopfteils 210a innen eine ringförmige schräge Fläche 274 aufweist mit einem eingeschlossenen Konuswinkel von etwa 45°. Die Wandstärke des hohlen Bereiches des Kopfteils 210a ist über die gesamte Länge dieses Bereiches zumindest im wesentlichen gleich. Das Bezugszeichen 236 deutet auf die mittlere Längsachse des Funktionselementes 210 und es ist ersichtlich, daß das Schafteil 210b und das Kopfteil 210a axial zueinander im Bezug auf diese mittlere Längsachse 276 angeordnet sind. Obwohl in dieser Ausführungsform das Kopfteil 210a des Funktionselementes im Querschnitt kreisrund ist, ist es denkbar, eine von der Kreisform abweichende Querschnittsform beispielsweise eine mehreckige Form oder eine Form mit Längsnuten oder Längsrippen zu wählen, insbesondere dann, wenn eine noch bessere Verdrehsicherung im eingebauten Zustand erwünscht ist.

Das Funktionselement 210 kann wie gesagt aus Stangenmaterial, Drahtmaterial oder Rohrmaterial herstellt werden, und zwar durch ein Wälzverfahren zur Erzeugung der äußeren Gestaltungsmerkmale des Funktionselementes, gegebenenfalls in Kombination mit einem Bohr- oder Schlagvorgang zur Herstellung der Zylinderbohrung 220. Alternativ hierzu kann das Element durch ein Kaltschlagverfahren erzeugt werden oder durch ein Hochdruckumformverfahren, was insbesondere dann in Frage kommt, wenn Rohrmaterial als Ausgangsmaterial für das Element dient.

Bei Verwendung eines Hochdruckumformverfahrens können die äußere Gestaltungsmerkmale des Funktionselements, wie etwa ein Gewinde durch die Formgebung der den Rohrabschnitt aufnehmende Form geformt werden, d.h. ein Walzverfahren zur Erzeugung das Gewinde wäre dann überflüssig.

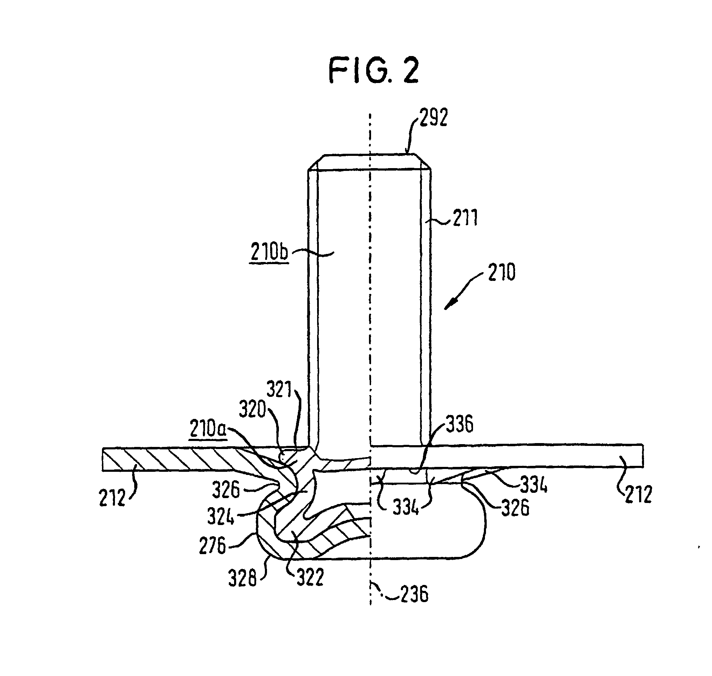

Figur 2 zeigt nun das Funktionselement 210 in eingebautem Zustand im Blechteil 212. Man merkt, daß das Kopfteil 210b erheblich verformt und formschlüssig mit einer durch das Anbringungsverfahren ausgebildeten topfartigen Vertiefung 276 des Blechteils 212 verbunden ist, wobei das Kopfteil 210b das Blechteil 212 nicht durchdringt, so daß eine wasserdichte Verbindung vorhanden ist in dem Sinne, daß sich evtl. unterhalb des Blechteils befindliche Wasser nicht durch das Blechteil um das Funktionselement 210 herum auf die obere Seite des Blechteils gelangen kann.

Das Zusammenbauteil gemäß Fig.2 wird später näher beschrieben.

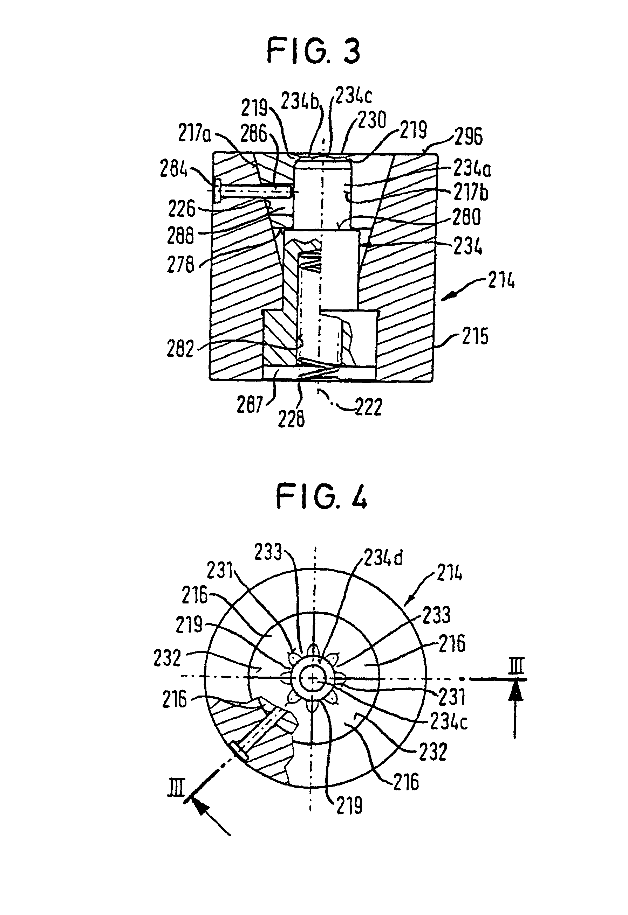

Für die Anbringung des Elementes im Blechteil wird die Matrize gemäß Figuren 3 und 4 verwendet. Wie aus den Figuren 3 und 4 ersichtlich, weist die Matrize vier Segmente oder Formteile 216 auf, die in axialer Richtung 222 der Matrize zur Herausnahme des Blechteils nach Anbringung des Funktionselements beweglich sind.

Die Formteile 216 liegen in Figur 3 und 4 jeweils mit einer schrägen, teilkonusförmigen Außenfläche 217a an einer schräg auf die mittlere Längsachse 222 zu verlaufenden kegelstumpfförmigen Formfläche 226 an und haben eine senkrecht zur Längsachse 222 der Matrize 214 verlaufende Unterseite 278, die unmittelbar oberhalb einer Ringschulter 280 eines mittig angeordneten Anschlagelementes 234 angeordnet sind, wobei in diesem Beispiel das Anschlagelement 234 durch eine Schraubendruckfeder 228 in Figur 3 nach oben gedrückt wird. Die Schraubendruckfeder 228 befindet sich nämlich in einer zur Längsachse 222 koaxial angeordneten zylindrischen Bohrung 282 des Anschlagelementes 234 und drückt mit ihrem einen Stirnende an das geschlossene Ende der Bohrung 282 am Anschlagelement 234 und mit ihrem anderen Ende an ein unteres Werkzeug der Presse, in dem die Matrize 214 angeordnet ist. Alternativ hierzu kann die Matrize 214 der Figur 3 an ihrem unteren Ende mit einem Bodenteil versehen werden, an dem dann die Schraubendruckfeder 228 an ihrem unteren Ende abgestützt wäre. Eine derartige Ausbildung hätte den Vorteil, daß die Matrize sich dann als Einheit darstellt, dessen einzelne Teile nicht verlorengehen können.

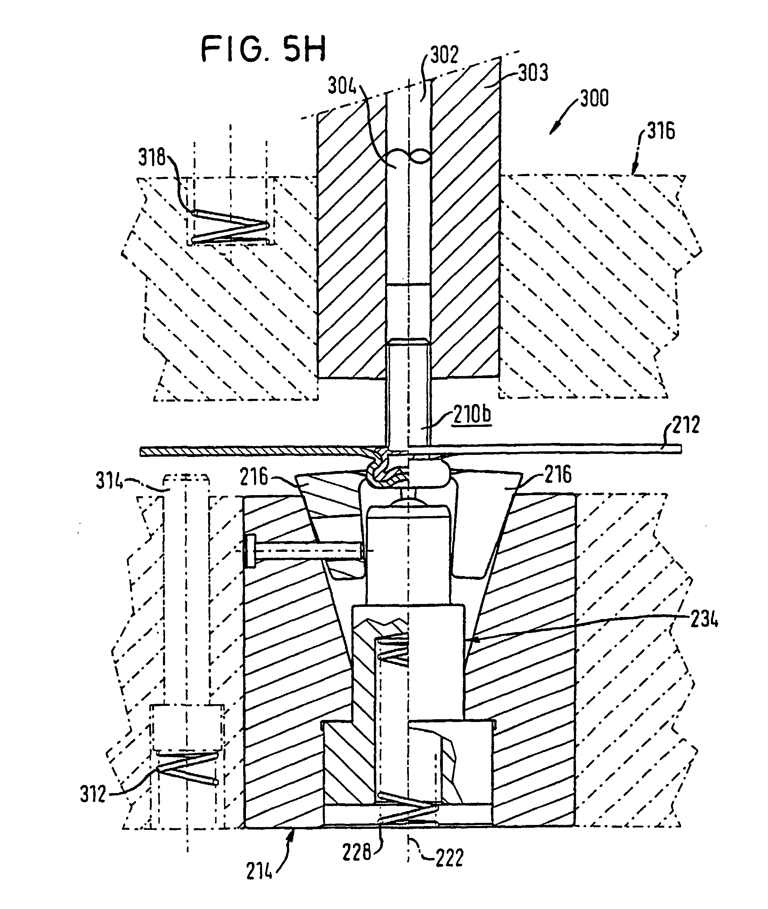

Es ragen vier Stifte 284 in radialer Richtung durch die Zylinderwand der Matrize 214, wobei das freie Ende 286 von jedem Stift (nur einer gezeigt) in eine entsprechende Ausnehmung 288 des jeweils zugeordneten Formteils 216 hineinragt. Die Stifte 284 begrenzen hierdurch die maximale Ausfahrbewegung der Formteile (ist in Figur 5H dargestellt) und halten die Formteile 216 verliersicher und in der erwünschten radialen Anordnung in der Matrize 214. Die Breite der jeweiligen Ausnehmungen 288 in den jeweiligen Formteilen 216 entspricht zumindest im wesentlichen dem Durchmesser der jeweiligen Enden 286 der Stifte 284, so daß die Stifte 284 die Segmente bzw. Formteile 216 führen, wenn sie vom geöffneten Zustand der Matrize (gemäß Figur 5H) in den geschlossenen Zustand gemäß Figur 3 zurückkehren.

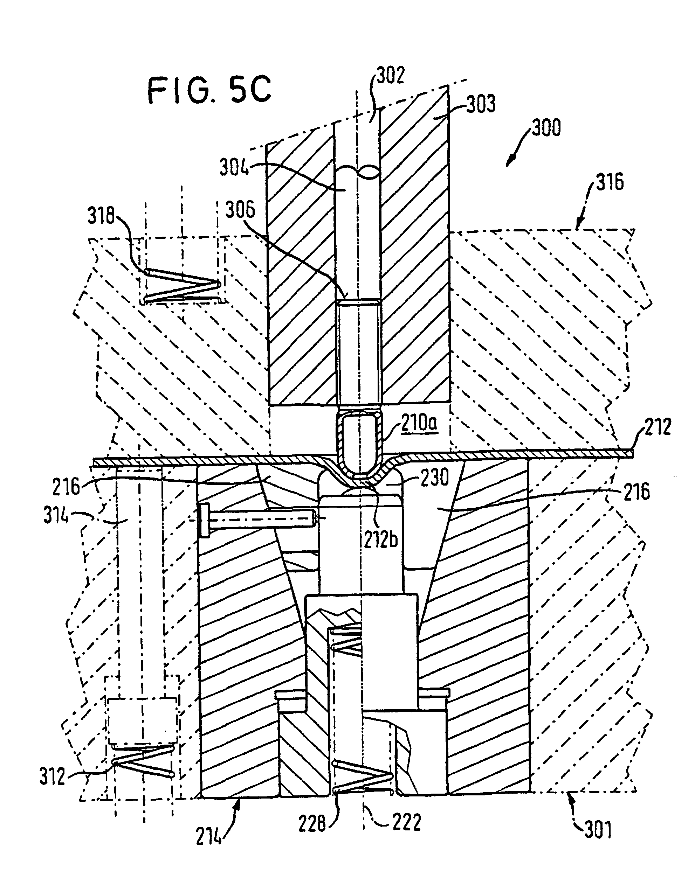

Wie ebenfalls aus den Figuren 3 und 4 ersichtlich, weist das Anschlagelement 234 oberhalb der Ringschulter 280 ein zylinderförmiges Teil 234a mit einem Stirnende 234b, welches den Boden eines im übrigen von den Formteilen 216 begrenzten, im wesentlichen zylindrischen Umformraum 230 bildet (siehe auch Fig. 5C). Man merkt, daß bei dieser Ausführungsform das Stirnende 234b des Anschlagelementes 234 einen mittig angeordneten kuppelartigen Vorsprung 234c aufweist, welcher von einer senkrecht zur mittleren Längsachse 222 stehenden Ringfläche 234d umgeben ist.

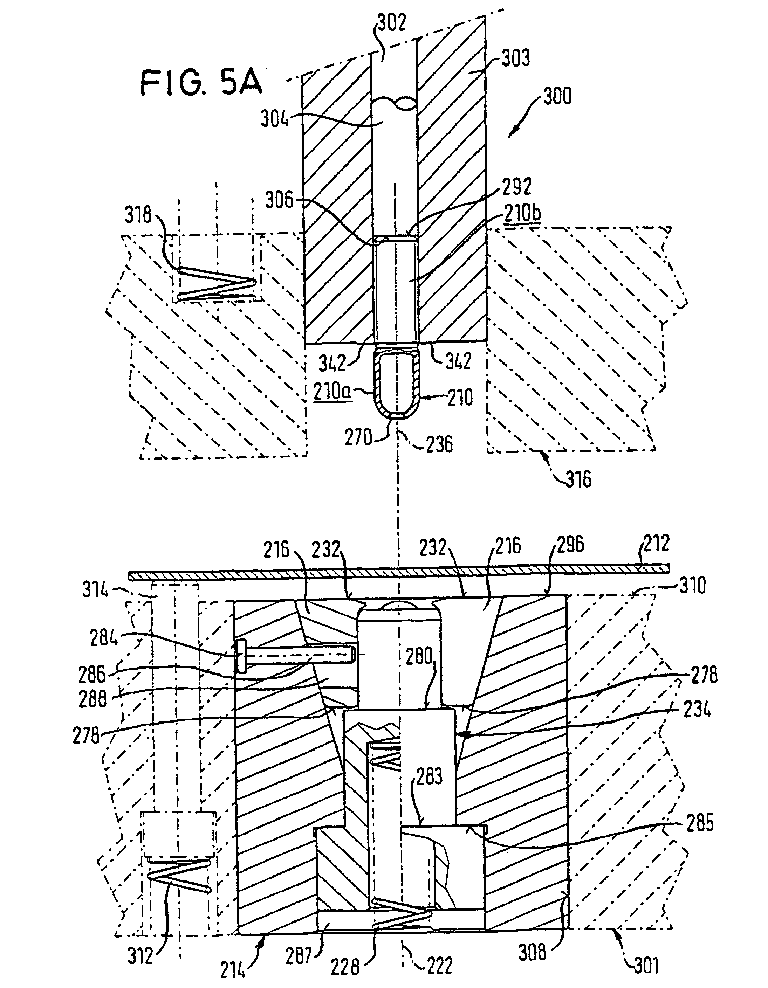

Die Formteile 216 liegen mit ihrem radial nach innen gerichteten teilkreiszylindrischen Flächen 217b im geschlossenen Zustand der Matrize an der zylindrischen Außenfläche des oberen Teiles 234a des Anschlagelementes an. Die Formteile 216 sind außerdem im Bereich ihrer oberen Enden jeweils mit einem der Längsachse 222 zugewandten wulst- bzw. nasenartigen Vorsprung 220 versehen, mit dem in einer noch zu beschreibenden Weise Blechmaterial des Blechteils 212 in eine sich ausbildende Hinterschneidung des Funktionselementes 210 gedrückt werden kann. In dieser Ausführungsform bilden die nasenartigen Vorsprünge 220 die seitliche Begrenzung des Umformraumes 230. In der Stirnseite 232 der Formteile 216 sind radial erstreckende Nuten 231 eingearbeitet so daß Nasen 233 dazwischen liegen, wobei die Gründe 235 der im Querschnitt in etwa halbkreisförmigen Nuten 231 schräg zur Längsachse 222 der Matrize stehen, wie aus Fig. 3 und vor allem Fig. 5A ersichtlich ist. Die Nuten 231 sind im allgemeinen abgerundet und dienen, wie auch die dazwischen liegenden Nasen 233, der Verdrehsicherung. Es sind insgesamt acht Nuten 231 und acht Nasen 233 in diesem Beispiel vorhanden - eine andere Zahl wäre auch möglich.

Es werden nunmehr mit Bezug auf die Figuren 5A bis 5H beschrieben, wie das Funktionselement 210 mit Hilfe der Matrize 214 an ein Blechteil 212 angebracht werden kann.

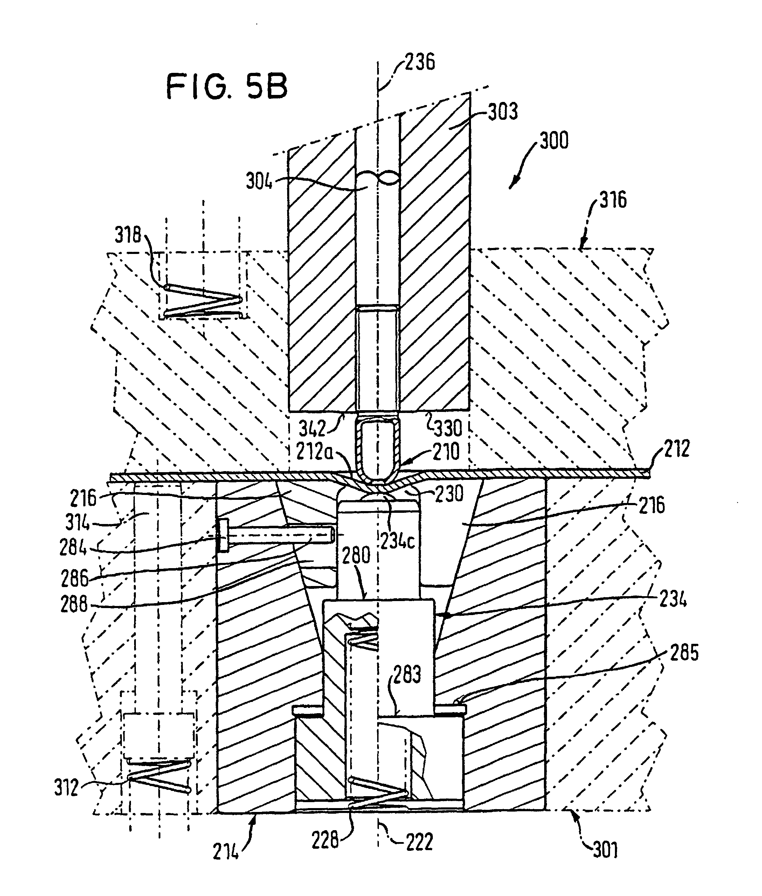

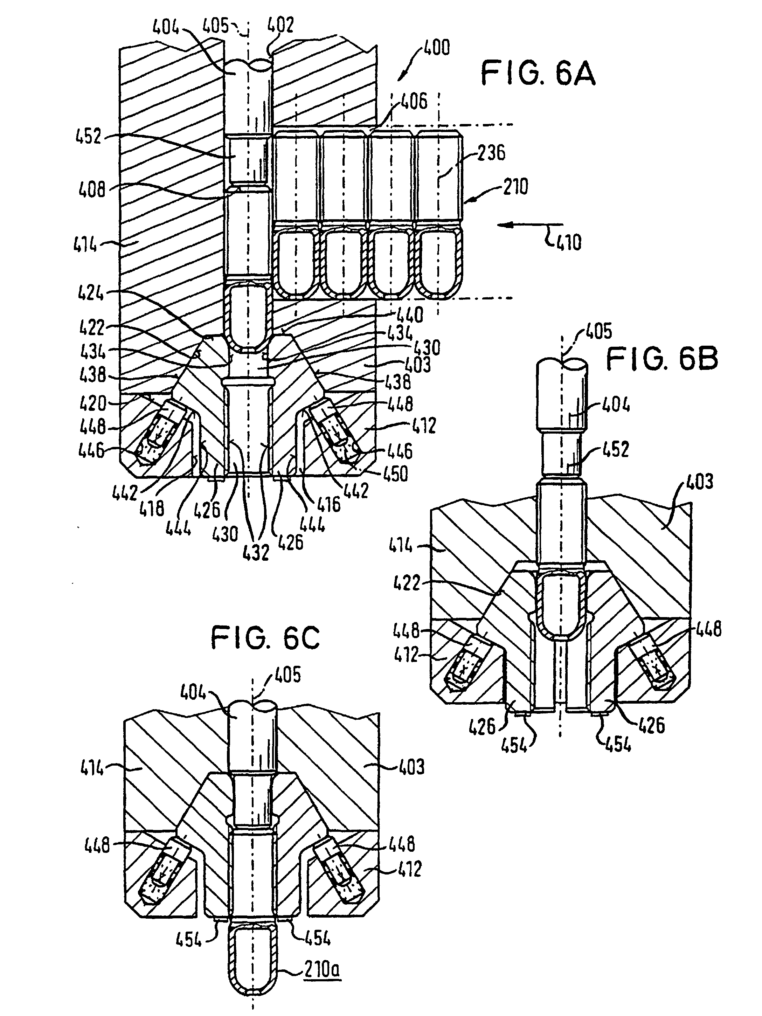

Figur 5A zeigt den Ausgangszustand, in dem die Matrize 214 sich im unteren Werkzeug (301) einer Presse befindet, ein Blechteil 212 oberhalb der Matrize angeordnet ist und das Formteil 210 in einem schematisch dargestellten Setzkopf 300 gehalten ist, beispielsweise durch eine Ringfeder aus Kunststoff (nicht gezeigt), welche einen Reibschluß zwischen dem Schaftteil 210b des Funktionselements 210 und einer Bohrung 302 eines Außenstempels 303 des Setzkopfes sicherstellt. Man merkt, daß die Längsachse 236 des Funktionselementes 210 mit der Längsachse 222 der Matrize 214 ausgerichtet ist und zugleich die mittlere Achse der Bohrung 302 eines Außenstempels 303 des des Setzkopfes 300 entspricht. Man merkt auch, daß alle Formteile 216 sich in ihrer unteren Position gemäß Figur 3 befinden, d.h. die Matrize 214 ist im Ausgangszustand geschlossen. Die obere Begrenzung der jeweiligen Ausnehmungen 288 der Formteile 216 liegt mit einem kleinen Abstand unmittelbar oberhalb der jeweiligen Enden 286 der jeweiligen Stifte 284. Diese Position entsteht aufgrund der Schwerkraft und der Führung durch die Stifte 284. Die Schraubendruckfeder 228 drückt das Anschlagelement 234 nach oben, so daß die Ringschulter 283 des Anschlagelements 234 an einer Ringschulter 285 einer Stufenbohrung 287 der Matrize 214 anliegt und die Ringschulter 280 des Anschlagelements 234 unmittelbar unterhalb der unteren Fläche 278 der jeweiligen Formteile 216 angeordnet ist. Im Außenstempel 303 des Setzkopfs 300 befindet sich ein Stempeleinsatz 304, dessen unteres Stirnende 306 auf das obere Stirnende 292 des Schaftteils 210b des Funktionselementes 210 drückt. Obwohl der Stempeleinsatz oder Innenstempel 304 gegenüber dem Außenstempel 303 in Richtung der Längsachse 236 bewegbar ist, hat er in der Fig. 5A und in den weiteren Fig. 5B bis 5G seine unterste Position in Bezug auf den Außenstempel 303 erreicht. Er kann jedoch axial nach oben in Bezug auf den Innenstempel gezogen werden, um ein neues Funktionselement 210 aufzunehmen, wie später im Zusammenhang mit Fig. 6 näher beschrieben wird.

Die Matrize 214 befindet sich hier in einer Bohrung 308 des unteren Werkzeuges 301 einer Presse, dessen Oberseite 310 bündig mit der Stirnseite 296 der Matrize und der Stirnseiten 232 der Formteile 216 angeordnet ist. Im unteren Werkzeug 301 befinden sich mehrere, mittels Feder 312 nach oben vorgespannte Stößel 314, die das Blechteil 212 bei der Einführung in die Presse abstützen, jedoch aufgrund der von einem Niederhalter 316 des Setzkopfs 300 ausgeübten Kraft beim Schließen der Presse nach unten drückbar sind, so daß das Blechteil 212 an der Stirnseite 296 der Matrize 214 und an der Oberseite 310 des unteren Werkzeuges 301 im Bereich der Matrize zur Anlage kommt und dort zwischen dem Niederhalter 316 und der Matrize 214 bzw. dem unteren Werkzeug 301 unverrückbar geklemmt ist.

Es können beispielsweise drei solche federvorgespannte Stößel 314 vorgesehen werden, die beispielsweise in gleichmäßigen Winkelabständen um die mittlere Längsachse 222 angeordnet sind, wobei aufgrund der Schnittzeichnung nur der eine Stößel 314 ersichtlich ist.

Der Niederhalter 316 ist auch in Richtung auf das Blechteil 212 zu vorgespannt und zwar durch Federn 218, die hier - wie die Feder 312 - schematisch als Schraubendruckfeder angedeutet sind, obwohl auch andere Federarten in Frage kommen, die im Werkzeugbau bestens bekannt sind.

In diesem Beispiel werden ebenfalls drei Federn 316 in gleichmäßigen Winkelabständen um die mittlere Längsachse 222 angeordnet, so daß der Niederhalter 316 unter der Kraft dieser Federn gleichmäßig nach unten gedrückt wird.

Figur 5B zeigt den ersten Schritt des Fügeverfahrens, bei dem der Setzkopf 300 aufgrund der Schließbewegung der Presse im Vergleich zu der Darstellung gemäß Figur 5A sich nach unten auf die Matrize 214 zu bewegt hat, so daß der Niederhalter 316 das Blechteil 212 zwischen sich und der oberen Seite 310 des unteren Werkzeugs 301 und der oberen Seite 296 und 232 der Matrize und der Formteile 216 unverrückbar geklemmt hat. Die Stößel 314 sind gegen die Kraft der Feder 321 nach unten gedrückt worden, bis ihre oberen Enden bündig mit der Oberseite 310 des unteren Werkzeugs liegen. Das Stirnende 270 des Funktionselementes 210 hat das Blechteil 212 auf den kuppelartigen Vorsprung 234c gedrückt.

Weiterhin hat der Stempel 304 das Stirnende 270 des Funktionselementes 210 das Blechmaterial in den Umformraum 230 hineingedrückt und dabei das Anschlagelement 234 gegen die Kraft der Feder 228 etwas nach unten bewegt, so daß der Umformraum 230 tiefer geworden ist. Dabei wird dort eine Vertiefung 212a im Blechteil 212 gebildet. Die Ringschulter 280 bewegt sich von der Unterseite 278 der Formteile 216 weg und die Ringschulter 283 entfernt sich ebenfalls von der Ringschulter 282. Die Kraft, die über den Setzkopf und das Funktionselement auf das Blechteil 212 ausgeübt wird, führt nicht zu einer Bewegung der Formteile 216, da diese bis zur Vollendung der Anbringung des Funktionselements an das Blechteil 212 stets in der gleichen Position bleiben. Wenn sich die Presse weiter schließt, bewegen sich der Innenstempel 304 und der Außenstempel 303 tiefer gegenüber dem Niederhalter 316 und drücken dabei das Anschlagelement 234 in seine unterste Position gemäß Fig. 5C. Dabei wird die Vertiefung 212a im Blechteil tiefer.

Bei der weiteren Schließbewegung der Presse wird die Vertiefung 212a des Blechteils 212 an ihrem unteren Ende breiter, ohne daß eine axiale Ausweichbewegung der Formteile 216 stattfindet bis schließlich das Blechteil 212 zwischen dem kuppelartigen Vorsprung 234c des Anschlagelementes 234 und dem Stirnende 270 des Kopfteils 210a des Funktionselementes 210 geklemmt ist. Dabei erzeugt der kuppelartige Vorsprung 234c eine leichte nach oben gerichtete Delle 212b im Blechteil, so daß dieses geringfügig in die Öffnung 270 am Stirnende des Funktionselementes eingedrückt wird.

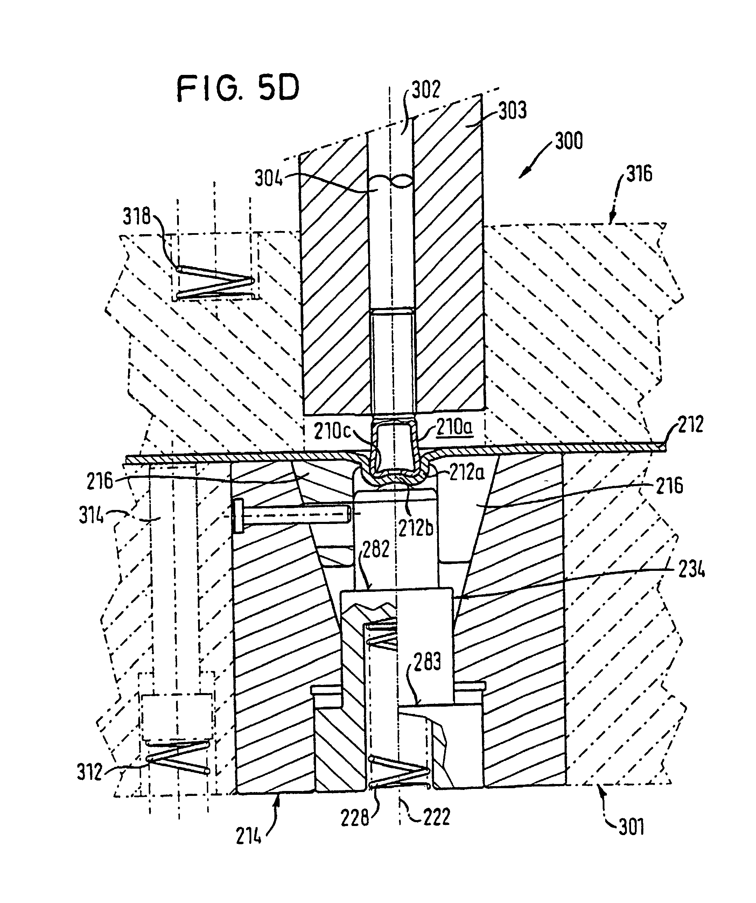

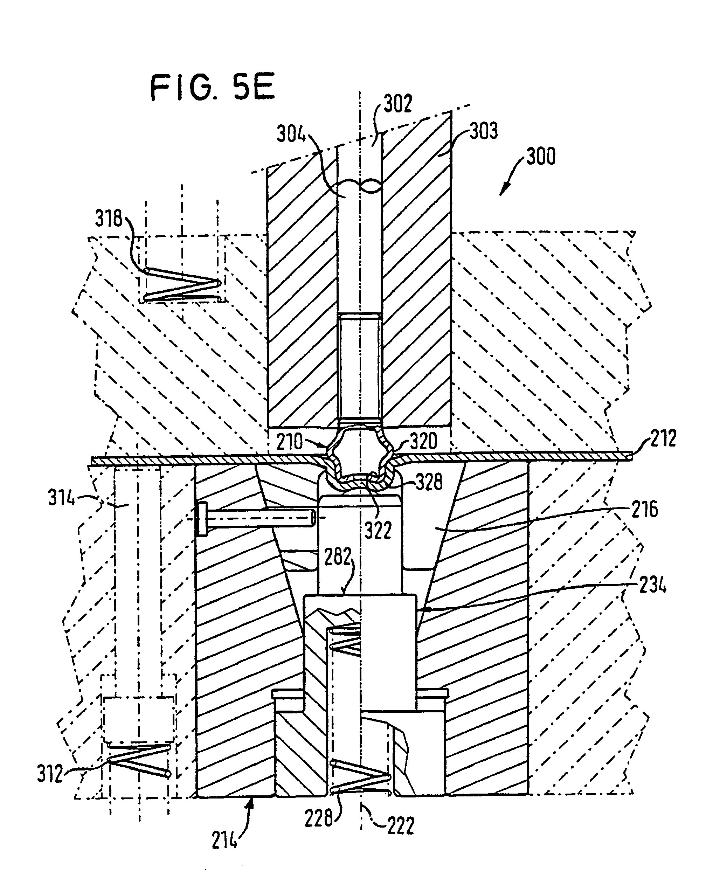

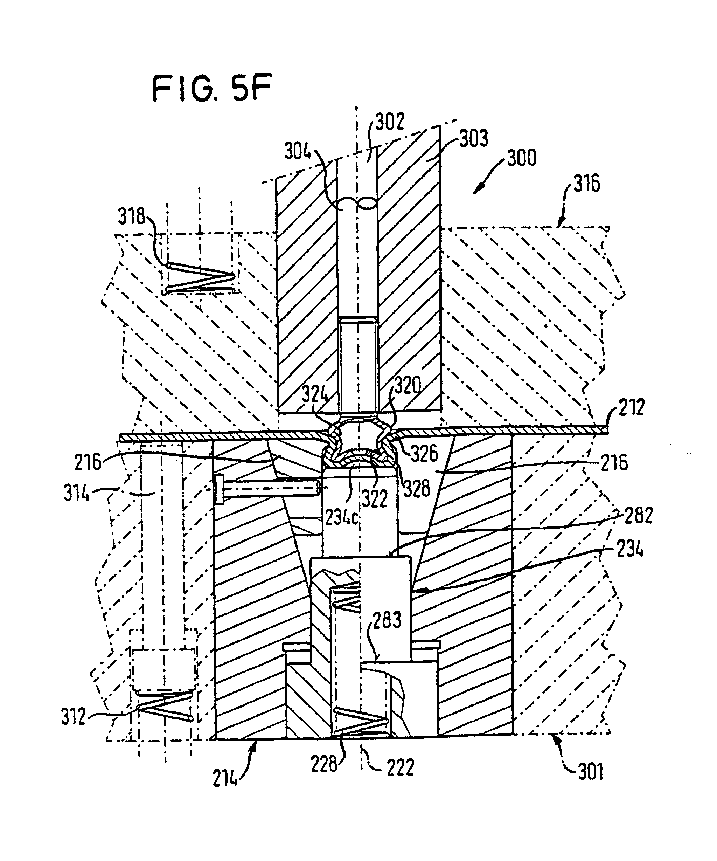

Im weiteren Stadium der Schließbewegung der Presse führt die auf das Kopfteil 210a des Funktionselementes 210 ausgeübte Kraft zu einer Verformung dessen unteren Endes, so daß sich die Gestalt ergibt, die in der Figur 5D gezeigt ist. Man merkt, daß das Blechteil 212 sich um die gerundeten Kanten der nasenartigen Vorsprünge 220 gelegt hat, daß das Stirnende 270 des Kopfteils 210a des Funktionselementes das Blechteil bei 212b teilweise um den kuppelartigen Vorsprung 234c gelegt hat und daß während dieser Verformungen das Stirnende des Kopfteils 210a selbst verformt wird, so daß sich das Funktionselement leicht radial nach außen im Bereich dessen unteren Endes erweitert wird, während der Bereich um das bisherige Stimende 270 axial nach innen verformt wurde und die Öffnung 270 sich nunmehr in einem konkaven Bereich 210c des Kopfteils 210a befindet.

Die Darstellung der Figur 5E ist der Darstellung der Figur 5D ähnlich, nur sieht man hier eine weiter fortgeschrittene Verformung des Blechteils 212.

Das untere Ende des Außenstempels 303 der Setzkopf 300 der Matrize 214 hat sich dem Blechteil 212 weiter genähert. Man merkt in Fig. 5E, daß der zylindrische Wandbereich des Kopfteils 210a nunmehr so gestaucht worden ist, daß sich ein radial nach außen vorspringender Wulst 320 aufgrund einer Faltung des zylindrischen Wandbereiches gebildet hat. Man merkt auch, daß eine weitere ausgeprägte Ringfaltung oder -wulst an der Stelle 322 vorliegt, wo die axial gerichtete Wandung des Kopfteils 210a in den radial nach innen gerichteten Bereich 212b übergeht, der aus dem ehemaligen Stirnende 264 des Kopfteils 210a gebildet ist.

Nach Erreichen des Zustandes gemäß Figur 5F ist die Stauchung des Kopfteils 210a des Funktionselements 210 nunmehr so groß, daß die Ringfaltung an der Stelle 322 sich nunmehr innerhalb des Umformraums 230 unterhalb der radial nach innen gerichteten Vorsprünge 220 der Formteile bewegt und das Blechteil 212 entsprechend um diese Vorsprünge gebogen hat. Weiterhin hat das untere ende des Kopfteils 210a das Blechteil gegen die Ringschalter 234d des Anschlagelements gedrückt, so daß der Umformraum 230 beinahe vollständig ausgefüllt ist. Die Ringfaltung 320 ist noch ausgeprägter im Vergleich zu Fig. 5E und die Ringfaltung 326 des Blechteils 212 um die Vorsprünge 220 ist bereits in der sich ausbildende radial nach innen gerichtete Ringwulst 324 zwischen der Ringfaltung 320 und der Ringfaltung 322 gefangengehalten.

Die weitere Ringfaltung 328 des Blechteils im Bereich des Übergangs von der Wand der topfartigen Vertiefung in deren Bodenbereich folgt der Ringfaltung 322 des Kopfteils 210a des Funktionselements so daß auch hier eine formschlüssige Verbindung zwischen dem Blechteil und dem Funktionselement vorliegt. Das untere Stirnende 330 des Außenstempels hat sich im Zustand der Fig. 5F der Matrize 214 weiter genähert.

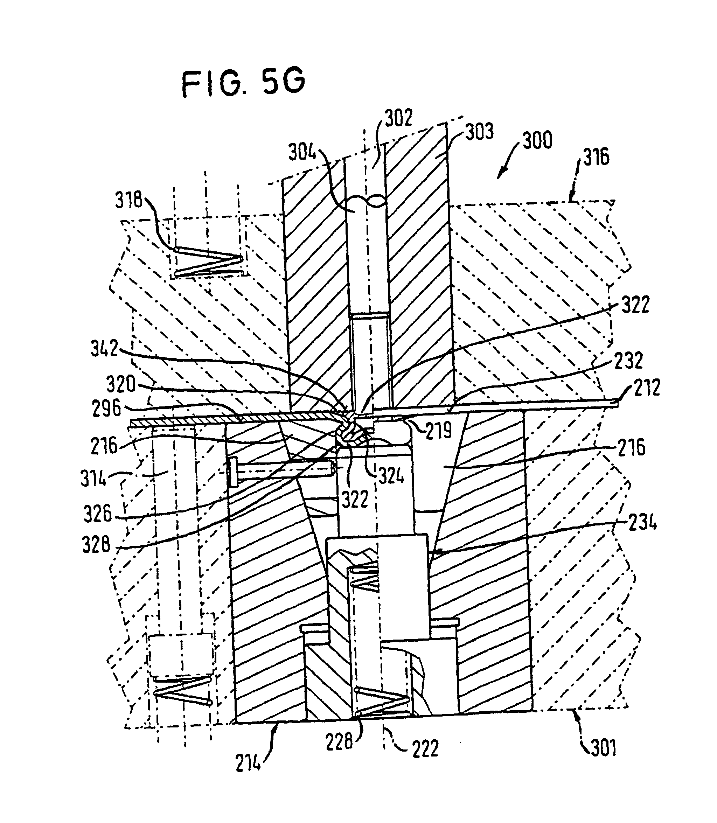

Die Schließbewegung der Presse setzt sich fort, bis, wie in der Figur 5G dargestellt, der geschlossene Zustand der Presse erreicht ist, das Blechteil 212 ist vollständig eingeschlossen zwischen dem Stirnende des Außenstempels 303 des Setzkopfes 300und dem diesen zugewandten Stirnende 296 der Matrize 214 bzw. den Stirnenden 232 der Formteile 216. Das Ergebnis dieser weiteren Stauchbewegung ist, daß sich die ringförmige Hinterschneidung 324 im Bereich der wulstartigen Vorsprünge 220 zwischen den Ringfalten 320 und 322 vollständig ausgebildet hat in der die Ringfaltung 326 des Blechteils festgeklemmt ist. Weiterhin ist die Ringfaltung 322 des Kopfteils 210a innerhalb der Ringfaltung 328 des Blechteils festgeklemmt. Der Stempelansatz 342 am Stirnende 330 des Außenstempels 303 hat die Ringfaltung 320 so zusammengestaucht, daß die zwei Materiallagen der Ringfaltung 320 bzw. des hierdurch gebildeten Ringwulsts fest aneinander liegen, wobei die Oberseite 321 (siehe Fig.2) des Ringfalzes 320 sich unterhalb der Ebene des flachen Blechteils 212 befindet.

Die durch den Stempelansatz 342 verursachte Stauchung hat auch dazu geführt, daß das Blech des Blechteils in die Vertiefungen 231 der Formteile 216 eingeformt ist, während die dazwischenliegenden Nasen 233 in das Blechteil eingedrungen sind. Diese Verformung des Blechteils 212 führt zu einer entsprechenden Verformung des Materials der Ringfaltung 320, so daß ein verzahnter Eingriff zwischen dem Blechmaterial und dem Material des Kopfteils 210a des Funktionselements in diesem Bereich vorliegt, der als Verdrehsicherung dient. Dort wo die Formteile 216 Vertiefungen 231 aufweisen, weist das fertige Zusammenbauteil Nasen 334 auf, die am besten in Fig. 2 aber auch in Fig.5H zu sehen sind. Dazwischen befinden sich Vertiefungen 336, die durch die Nasen 233 der Formteile gebildet sind. Eine innige Verbindung hat daher im Bereich des Kopfteils 210a stattgefunden, so daß die formschlüssige Verbindung mit dem Blechteil eine wirklich sichere Verbindung ist, d.h. sowohl Verdrehsicher als auch sicher gegen in axialer Richtung wirkende Kräften ist.

Wenn der Zustand gemäß Figur 5G erreicht ist, öffnet sich die Presse und geht in den Zustand gemäß Fig. 5H über. Das Zusammenbauteil (210 + 212) kann nunmehr entfernt werden. Die Formteile 216 bewegen sich bei Öffnung der Presse unter der Wirkung der Feder 312 und der Stößel 314 und/oder eines etwaigen Eingriffs zwischen dem Setzkopf 300 und dem Schaftteil 210b nach oben und schwenken nach außen, so daß der geöffnete Ausgangszustand der Matrize erreicht wird. Nach der Entfernung des Zusammenbauteils fallen die Formteile in die Ausgangsposition gemäß Fig. 5A zurück der soeben beschriebene Zyklus wiederholt sich mit einem neuen Funktionselement 210 und einem neuen Blechteil 212. Die Presse wird soweit geöffnet, daß das so gebildete Zusammenbauteil, das in Figur 2 für sich in einem großen Maßstab dargestellt ist, aus der Presse entnommen oder zur nächsten Station eines Folgeverbundwerkzeugs transportiert werden kann, sofern ein solches zur Anwendung gelangt. Wenn die Presse geöffnet wird, kehrt das Anschlagelement 234 in die Position gemäß Fig. 5A aufgrund der Kraft der Feder 228 zurück.

Obwohl die Federn 228, 312 und 318 hier als Schraubendruckfedern gezeigt sind, können sie durch andere Federn ersetzt werden, beispielsweise durch Fluiddruckfedern, die an sich gut bekannt sind.

Sollten die Funktionselemente 210 wie oben erwähnt mit einem nicht kreisrunden Querschnitt im Bereich des Kopfteils 210a versehen werden, beispielsweise mit einem mehreckigen Querschnitt oder mit Rippen und/oder Nuten, so wird das Verfahren genauso durchgeführt wie oben beschrieben. Das Blechmaterial wird innig und formschlüssig mit der Außenform des Kopfteils verbunden, wodurch eine erhöhte Sicherheit gegen Ausdrehen zu erwarten ist. Bei einer derartigen Ausbildung soll darauf geachtet werden, daß die Formmerkmale auf der Außenseite des Kopfteils 210a nicht so ausgeprägt sind, daß sie das Blechmaterial in unzulässiger Weise verletzen. Auch könnte hier ein Klebstoff zur Anwendung gelangen bspw. ein Trockenklebstoff der auf dem Kopfteil 210a des Funktionselements aufgebracht wird und unter Druck aktiviert wird und zu einer geklebten Verbindung zwischen dem Blechteil und dem Funktionselement führt.

Es ist außerdem möglich, das Blechteil an der Stelle der Anbringung des Funktionselements vorzulochen, wodurch der Rand der Lochung zwischen den Falzen 320 und 322 zu liegen kommen wird. Die Lochung könnte auch so vorgenommen werden, daß bei Ausführung des Funktionselements als Mutterelement, was grundsätzlich möglich ist, ein elektrisch leitender Anschluß, d.h. Masseanschluß nach der deutschen Patentanmeldung 198 48 617.0 erreicht werden kann. Um ein Mutterelement zu realisieren, wäre es nur erforderlich, das Schaftteil 210b hohl auszuführen und mit einem Innengewinde zu versehen, was vor oder nach der Anbringung am Blechteil erfolgen kann, beispielsweise nachträglich mittels einer gewindeformenden oder -schneidenden Schraube. Bei der Ausbildung als Mutterelement kann die entsprechende Schraube entweder von der Schaftteilseite des Blechteils oder von der entgegengesetzten Seite des Blechteils in das Element eingeschraubt werden.

Fig. 6 zeigt nun im Detail eine mögliche Stempelanordnung 400, die anstelle der Stempelanordnung 303, 304 gemäß Fig. 5 mit Vorteil verwendet werden kann.

Der Außenstempel 403 ist mit einer Innenbohrung 402 versehen, die koaxial zur Längsachse 405 angeordnet ist und den Innenstempel 404 verschiebbar aufnimmt. Auf der rechten Seite der Schnittzeichnung gemäß Fig. 6A ist eine Zuführpassage 406 gezeigt, über die Funktionselemente 210 von einer Zuführeinrichtung (nicht gezeigt) in den durch die Bohrung 402 gebildeten Stempelkanal hineinführt. Man merkt, daß die Längsachsen 236 der einzelnen Funktionselemente parallel zur Längsachse 405 des Stempelkanals 402 stehen und daß die einzelnen Funktionselemente einander berührend aneinander aufgereiht sind. Aufgrund der Abmessung des Stempelkanals 402 kann jedoch jeweils nur ein Funktionselement 210 sich im Stempelkanal 402 befinden.

Bei der Öffnung der Presse wird der Außenstempel 403 gegenüber dem Innenstempel 404 nach unten verschoben, üblicherweise unter dem Druck einer entsprechenden Feder (nicht gezeigt), und zwar bis das Stirnende 408 des Innenstempels 404 in etwa in der Höhe der oberen Begrenzung der Zuführpassage 406 gelangt, so daß ein Funktionselement 210 durch Druck in Richtung des Pfeiles 410 in den Stempelkanal 402 hineingeführt werden kann.

Der Außenstempel 403 ist in dieser Ausführungsform mehrteilig ausgebildet und besteht aus einem unteren Ringteil 412, das mittels nicht dargestellter Schrauben an einem oberen Teil 414 befestigt ist. Der untere Ringteil 412 hat eine mittlere Öffnung 416 mit einer kreiszylindrischen Ringwand 418, die in einen konusförmigen Bereich 420 übergeht. Sowohl der kreiszylindrische Bereich 419 als auch der konusförmige Bereich 420 sind konzentrisch zur Längsachse 405 angeordnet. Der obere Teil 414 des Außenstempels 403 ist mit einer konusförmigen Vertiefung 422 versehen, die über eine Ringschulter 424 in den Stempelkanal 402 übergeht. Auch der konusförmige Bereich 422 und die Ringschulter 424 sind konzentrisch zur Längsachse 405 der Stempelanordnung angeordnet.

In dem Bereich zwischen dem oberen Teil 414 und dem unteren Teil 412 der Stempelanordnung 403 befinden sich in diesem Beispiel drei Segmente 426, die in gleichmäßigen Winkelabständen um die mittlere Längsachse 405 angeordnet sind. Die drei Segmente 426, von denen nur zwei in Fig. 6 ersichtlich sind, bilden gemeinsam eine koaxial zur Längsachse 405 angeordnete Aufnahme 430 für ein jeweiliges Funktionselement 210. Die unteren, radial nach innen gerichteten Flächen 432 der Segmente 426 sind als Segment eines Gewindezylinders ausgebildet, der komplementär zu dem Gewindezylinder 211 des Schaftteils 210b der Funktionselemente 210 gestaltet ist. Die oberen, radial nach innen gerichteten Flächen 434 der Segmente 426 bilden gemeinsam eine Passage 436 mit einem Durchmesser, der etwas kleiner ist als der Außendurchmesser des Kopfteils 210a der jeweiligen Funktionselemente 210. Die radial äußeren Flächen 438 der Segmente 426 sind als teilkonusförmige Flächen ausgebildet, die komplementär sind zu der konusförmigen Fläche 422 der entsprechenden Vertiefung des oberen Teils 414 des Außenstempels 403. Die axial oberen Flächen 440 der Segmente 426 sind komplementär zu der Ringschulter 424 ausgebildet, so daß in der Stellung gemäß Fig. 6A die teilkonusförmigen Flächen 438 der Segmente 426 und die teilkreisförmigen Flächen 440 satt an den jeweils gegenüberliegenden Flächen des Außenstempels 403 anliegen, d.h. an der konusförmigen Fläche 422 und an der Ringschulter 424. In dieser Stellung ist die Durchgangspassage 436, die von den Segmenten 426 gebildet ist und konzentrisch zur Längsachse liegt, so gestaltet, daß sie im Durchmesser kleiner ist als der Außendurchmesser des Kopfteils 210a des Funktionselements 210. Somit kann das jeweilige Funktionselement 210 zunächst nicht zwischen den Segmenten 426 hindurchfallen, sondern wird am oberen Ende der Segmente 426 abgestützt, wie in Fig. 6A gezeigt.

Der obere Bereich der jeweiligen Segmente 426 geht über eine teilkonusförmige Fläche 442 in einen teilzylindrischen Wandteil 444 über. Die teilkonusförmigen Flächen 442 der Segmente 426 liegen in der Stellung gemäß Fig. 6A der konusförmigen Fläche 420 des Unterteils 412 der Stempelanordnung 400 gegenüber und weisen von dieser Fläche 420 einen Abstand auf. Die teilzylindrischen Flächen 444 der Segmente 426 stehen der teilzylindrischen Fläche 418 des Unterteils 412 der Stempelanordnung 400 gegenüber und weisen von dieser jeweils einen radialen Abstand auf.

Um sicherzugehen, daß die Segmente 426 in die zentrierte Ausgangsposition gemäß Fig. 6A stets zurückkehren, sind mit Federn 446 vorgespannte Stößel 448 vorgesehen, deren Achsen 450 schräg zur Längsachse 405 der Stempelanordnung 400 und senkrecht zu der konusförmigen Fläche 420 des Unterteils 412 der Stempelanordnung 400 stehen. Aufgrund der Federvorspannung werden die Stößel 448 so gegen die unmittelbar diesen berührenden teilkonusförmigen Flächen 442 der Segmente 426 gedrückt, daß diese bei geöffneter Presse stets die Position annehmen, die in Fig. 6A gezeigt ist. Die Federvorspannung ist nicht sehr stark.

Wird nun die Presse geschlossen, so wird der Innenstempel 404 gegenüber dem Außenstempel 403 nach unten gedrückt und und drückt dabei das jeweilige sich im Stempelkanal 404 befindliche Funktionselement 210 gegen die obere Stirnseite 440 der Segmente 426. Aufgrund des angeschrägten Eingangs zu der Passage 436 und der entsprechend geneigten Außenfläche im Bereich der unteren Stirnseite 270 des jeweiligen Funktionselementes 210 genügt die Kraft, die auf den Innenstempel 404 ausgeübt wird, um die Segmente nach unten in axialer Richtung 405 und radial nach außen.zu drücken, so daß sie die Stößel 448 nach unten drücken, bis die teilkonusförmigen Flächen 442 in Berührung mit der konusförmigen Fläche 420 des unteren Teils 412 des Außenstempels 403 geraten. Durch die radial nach außen gerichtete Bewegung der Segmente 426 wird der Innendurchmesser der durch diese Segmente begrenzten Passage 436 größer, so daß das jeweilige sich im Stempelkanal 402 befindliche Funktionselement unter der Kraft des Innenstempels 404 in die Passage zwischen den Segmenten 426 hineingedrückt wird. Ein Zwischenstadium dieser Bewegung ist in Fig. 6B gezeigt und diese Bewegung setzt sich anschließend fort, bis das obere, mit einem Außengewinde versehene Schafteil 210b des jeweiligen Funktionselements 210 sich im unteren Bereich der Segmente 426 befindet, wobei diese dann unter der Kraft der die Stößel 448 vorspannenden Feder 446 radial nach innen und nach oben bewegen, bis die Teilgänge in den radial nach innen gerichteten unteren Flächen 432 der Segmente 426 in den Gewindezylinder 211 des Funktionselements 210 formschlüssig eingreifen. Diese Situation ist in Fig. 6C dargestellt und man merkt, daß der vordere Abschnitt 452 des Innenstempels 404, der einen kleineren Außendurchmesser aufweist als der obere Teil des Innenstempels 404, formschlüssig innerhalb der durch die Segmente 426 gebildete Passage 436 angeordnet ist. Das Funktionselement 210 in Fig. 6C hat nun eine Stellung erreicht, die mit der Stellung gemäß Fig. 5A vergleichbar ist und das Stanzverfahren zum Einsetzen des Elementes kann nun beginnen und läuft dann entsprechend der Figur 5 ab.

Obwohl nicht in der Figur 6 gezeigt, ist die Anordnung so getroffen, daß der Innenstempel 404 sich nicht weiter nach unten bewegen kann als in Fig. 6C gezeigt. Dies kann beispielsweise dadurch verhindert werden, daß der obere Teil des Innenstempels 404 mit einem Kopf versehen ist (nicht gezeigt), der in der "tiefsten" Stellung gemäß Fig. 6C zur Anlage an den Außenteil 403 des Stempels gelangt ist. Die Kraft der Presse wird nunmehr über den Innenstempel 404 auf die Stirnseite 292 des Funktionselements 210 und über den Außenstempel 403 und die Segmente 426 an das Gewinde 211 des Funktionselements übertragen. Hierdurch wird sichergestellt, daß das Gewinde nicht beschädigt werden kann, da es formschlüssig innerhalb der komplementären Gewindeteile der Segmente 426 aufgenommen ist, so daß der Gewindezylinder nicht gestaucht werden kann. Sollte das Schaftteil 210b des Funktionselements hohl ausgebildet werden, so kann der zylindrische Vorsprung 452 des Innenstempels 404 entsprechend gestaltet werden und sich über eine an das Stirnende des Funktionselements 210 drückende Ringschulter (nicht gezeigt) in die innere Bohrung des Schaftteils hineinerstrecken, so daß die Einpreßkräfte auf das Funktionselement 210 übertragen werden können, ohne daß eine Beschädigung dieses Elements durch Zusammendrücken der Wandung des hohlen Schaftteils zu befürchten ist, da dieses durch den verlängerten Vorsprung des Innenstempels abgestützt ist.

Es soll an dieser Stelle zum Ausdruck gebracht werden, daß die Anzahl der Segmente 426 nicht auf drei beschränkt ist. Die Mindestzahl, die erforderlich ist, um diese Ausführungsform zu realisieren ist zwei, es können aber auch drei, vier oder mehr solche Elemente zur Anwendung gelangen, wobei vorzugsweise für jedes Element ein jeweiliger Stößel 448 mit Vorspannfeder 446 vorzusehen ist.

Die unteren Enden der Segmente 426 können, falls erwünscht, mit Nasen 454 versehen werden, die gemeinsam den Stempelansatz 342 gemäß Fig. 5 bilden.

Nach der Anbringung des Funktionselements 210 entsprechend der Zeichnungsfolge der Fig. 5, öffnet sich die Presse wieder, wobei entweder der gefederte Niederhalter 316 und/oder die Formteile 216 eine Kraft auf das Blechteil 212 mit dem angebrachten Funktionselement 210 ausübt bzw. ausüben, die ausreicht, um die Segmente 426 nach unten zu ziehen in die Stellung gemäß Fig. 6B, um das Schaftteil 210b freizugeben. Da die Federspannung der Feder 446 klein ist, erfolgt die Freigabe des Funktionselements bei der Öffnung der Presse, ohne das jeweilige soeben angebrachte Funktionselement 210 zu beschädigen.

Nach der Freigabe des soeben angebrachten Funktionselements 210 führt die Öffnung der Presse außerdem dazu, daß der durch Federkraft nach unten vorgespannte Außenstempel 403 nach unten gedrückt wird, während der Innenstempel 404 nach oben gezogen wird, bis er die Ausgangsposition erreicht, bei der die untere Stirnseite 408 des Innenstempels 404 die Höhe der oberen Begrenzung der Passage 466 erreicht hat, wodurch ein neues Element in den Stempelkanal 402 durch den Druck in Pfeilrichtung 410 hineingeführt wird. Der Arbeitszyklus fängt dann erneut an mit einem neuen Blechteil und mit einem neuen Funktionselement 210, nämlich das Funktionselement, das sich nunmehr im Stempelkanal 402 befindet.

Obwohl in den Fig. 3 bis 5 das Anschlagelement 234 als beweglich gezeigt und beschrieben wurde, ist dies nicht zwingend erforderlich. Das Anschlagelement 234 könnte stattdessen eine feste Position innerhalb der Matrize 214 aufweisen, welche der untersten Position gemäß Fig. 5D, 5E, 5F und 5G entspricht.

Es kann sich bei der Werkzeuganordnung um eine Station eines Folgeverbundwerkzeugs handeln, bei dem ein Blechstreifen durch mehrere Stationen zur Durchführung von mehreren Operationen hindurchgeführt wird. Die Werkzeuganordnung kann aber auch in einer Stanzpresse eingesetzt werden, die für jeden Hub einen Einzelteil herstellt. Die Anbringung der Werkzeuganordnung an einen Roboter oder an eine andere Art von Werkzeug ist ebenfalls möglich.

Obwohl die Segmente 426 vorzugsweise mit Formmerkmalen versehen sind , die in entsprechende Formmerkmale am Schaftteil des Funktionselements eingreifen, ist dies bei manchen Anwendungen nicht erforderlich. Die Segmente könnten bspw. eine reine teilzylindrische Fläche aufweisen die bei einem massiven Schaftteil ausreichen um das entsprechende Funktionselement durch Reibschluß zu halten. Die Stempelanordnung kann außerdem in Setzköpfen angewandt werden, die für die Anbringung von anderen Funktionselementen benutzt werden.

Die hier beschriebenen Funktionselemente können zum Beispiel aus allen Materialien hergestellt werden, die die Festigkeitsklasse 5.6 erreichen. Solche Metallwerkstoffe sind üblicherweise Kohlenstoffstähle mit 0,15 bis 0,55 % Kohlenstoffgehalt.

Bei allen Ausführungsformen können auch als Beispiel für den Werkstoff der Funktionselemente alle Materialien genannt werden, die im Rahmen der Kaltverformung die Festigungswerte der Klasse 8 gemäß Isostandard erreichen, beispielsweise eine 35B2-Legierung gemäß DIN 1654. Die so gebildeten Befestigungselemente eigenen sich u.a. für alle handelsüblichen Stahlwerkstoffe für ziehfähige Blechteile wie auch für Aluminium oder deren Legierungen. Auch können Aluminiumlegierungen, insbesondere solche mit hoher Festigkeit, für die Funktionselemente benutzt werden, z.B. AlMg5.

Die bisher durchgeführten Versuche haben gezeigt, daß bei Anwendung des Materials 35B2 das Verhältnis der radialen Wanddicke des Kopfteils zum Außendurchmesser des Kopfteils im Bereich zwischen 0,15 bis 0,2 liegt. Höhere Werte sind anstrebbar, da sie die Bruchkräfte bzw. Ausziehkräfte erhöhen. Es muß jedoch sichergestellt werden, daß die Einpreßkräfte nicht zu einer unzulässigen Deformation führen. Bei einem Durchmesser von 8 mm hat eine radiale Wanddicke von 1,2 mm sich als günstig erwiesen.

## Patentansprüche

1. Verfahren zur insbesondere flüssigkeits- und/oder gasdichten Anbringung eines Funktionselementes (210), insbesondere eines Befestigungselementes, an einem Blechteil (212), wobei das mit einem hohlen Kopfteil (210a) versehene Funktionselement (210) gegen das durch eine Matrize (214) abgestützte Blechteil (212) gepresst wird,
**dadurch gekennzeichnet,**
**dass** bei gleichzeitiger Verformung des hohlen Kopfteils (210a) und Umformung des Blechteils (212) in einen durch Formteile (216) der Matrize definierten zylindrischen Umformraum (230), der einen Boden aufweist, das Blechmaterial in eine durch Verformung des Kopfteils (210a) ausgebildete Hinterschneidung (324) hineingeformt wird, wobei die Formteile bei der Umformung unbeweglich gehalten werden, jedoch zur Herausnahme des am Blechteil angebrachten Funktionselements aus der Matrize teilweise herausgehoben werden.

2. Verfahren nach Anspruch 1,
**dadurch gekennzeichnet,**
**daß** Blechmaterial durch die auf das Funktionselement (210) ausgeübte Preßkraft bei der Umformung mit an den dem Blechmaterial zugewandten Stirnseiten der Formteile (216) ausgebildeten, insbesondere nut- und/oder rippenartigen Formmerkmalen (231,233) in Eingriff gebracht wird und hierdurch sowohl das Blechteil (212) als auch der darüberliegende Bereich des Kopfteils (210a) zur Ausbildung einer Verdrehsicherung verformt werden.

3. Verfahren nach Anspruch 1 oder 2,
**dadurch gekennzeichnet,**
**daß** das Blechmaterial erst in die Hinterschneidung (324) gedrückt und bevorzugt mit den die Verdrehsicherung bildenden Formmerkmalen in Eingriff gebracht wird, nachdem das Blechteil (212) durch das zur Anbringung am Blechteil in Richtung einer Längsachse (222) der Matrize (214) bewegte Funktionselement (210) zumindest teilweise in den Umformraum (230) umgeformt, und insbesondere mit einer etwa kragen- oder topfartigen Vertiefung versehen worden ist.

4. Verfahren nach einem der vorhergehenden Ansprüche,
**dadurch gekennzeichnet,**
**daß** das Blechteil (212) zumindest im Bereich des Funktionselementes (210) bei dessen Anbringung am Blechteil (212) nicht perforiert, d.h. nicht gelocht wird.

5. Verfahren nach einem der Ansprüche 1 bis 3,
**dadurch gekennzeichnet,**
**daß** an der Stelle der Anbringung des hohlen Kopfteils (210a) des Funktionselements (210) ein vorgelochtes Blechteil verwendet wird, wobei das Loch im Durchmesser deutlich kleiner ist als der Außendurchmesser des hohlen Kopfteils (210a)

6. Verfahren nach einem der vorhergehenden Ansprüche,
**dadurch gekennzeichnet,**
**daß** die Formteile (216) zur Ausbildung des Umformraums (230) segmentartig um ein Anschlagelement (234) angeordnet sind, das einen kuppelartigen Vorsprung (234c) aufweist, wobei die Verformung des zigarrenförmigen Endes des hohlen Kopfteils (210a) des Funktionselements teilweise mittels dieses Vorsprungs (234c) durchgeführt wird.

7. Verfahren nach einem der vorhergehenden Ansprüche,
**dadurch gekennzeichnet,**
**daß** die Formteile (216) zur Freigabe des aus dem Blechteil (212) und dem Funktionselement (210) bestehenden Zusammenbauteils teilweise aus einer konischen Aufnahme der Matrize (214) herausgehoben und radial nach außen geschwenkt werden.

8. Verfahren nach einem der vorhergehenden Ansprüche,
**dadurch gekennzeichnet,**
**daß** bei der Verformung des hohlen Kopfteils (210a) des Funktionselements diese zu zwei voneinander durch die Hinterschneidung (324) beabstandeten Ringfalzen bzw. Ringwülsten (320 und 322) umgeformt wird.

9. Verfahren nach Anspruch 8,
**dadurch gekennzeichnet,**
**daß** das Blechmaterial des Blechteils, das in die Hinterschneidung (324) hineinragt, ebenfalls als Ringfalz bzw. Ringwulst (326) ausgebildet wird.

10. Verfahren nach Anspruch 9,
**dadurch gekennzeichnet,**
**daß** das Blechmaterial des Blechteils, das zu einem topfartigen Gebilde umgeformt wird, das verformte Kopfteil (210a) des Funktionselements (210) umschließt.

11. Verfahren nach Anspruch 10,
**dadurch gekennzeichnet,**
**daß** dem Bodenbereich des topfartig umgeformten Blechteils (212) eine konvexe, dem Schaftteil des Funktionselements zugewandte Form gegeben wird.

12. Verfahren nach einem der Ansprüche 10 oder 11,
**dadurch gekennzeichnet,**
**daß** der dem Bodenbereich zugewandte Ringfalz (322) des Kopfteils (210a) des Funktionselements (210) in den Eckbereich der topfartigen Vertiefung des Blechteils (212) hineingeformt wird, die zwischen dem Bodenbereich und der Seitenwand der topfartigen Vertiefung ausgebildet wird.

13. Matrize (214) zur Verwendung in einem Verfahren nach einem der vorhergehenden Ansprüche, mit
einem hohlen Körper (215) mit einer zur Abstützung eines Blechteils vorgesehenen Stirnseite (296), die über eine sich konusförmig verjüngende Wand (226) in einen ein Anschlagelement (234) aufnehmenden Raum (227) übergeht, wobei das Anschlagelement zur Bildung eines im Querschnitt keilförmigen Ringspalts von der sich konusförmig verjüngenden Wand beabstandet ist und die der Stirnseite des hohlen Körpers zugewandte Stirnseite des Anschlagelements von der Stirnseite des hohlen Körpers zurückversetzt ist und einen von einer Ringfläche (234d) umgebenen, kuppelartigen Vorsprung (234c) aufweist, und weiter mit mehreren, bevorzugt von zwei bis acht, insbesondere von vier, vorzugsweise baugleichen Formteilen (216), die um die Längsachse (222) der Matrize (214) herum in den keilförmigen Ringspalt angeordnet sind und sowohl an der konusförmigen Wand (226) als auch am Anschlagelement (234) abgestützt sind, sowie mit einem zwischen den Formteilen (216) und dem zurückversetzten Stirnende des Anschlagelements gebildeten Umformraum (230) in den Formvorsprünge (220) der Formteile (216) hineinragen.

14. Matrize nach Anspruch 13,
**dadurch gekennzeichnet,**
**daß** jedes Formteil (216) segmentartig nach Art von Tortenstücken um die Längsachse (222) der Matrize (214) um das Anschlagelement (234) der Matrize (214) herum angeordnet sind.

15. Matrize nach Anspruch 13 oder 14,
**dadurch gekennzeichnet,**
**daß** die Formvorsprünge (220) der Formteile (216) in einer Längsebene der Matrize geschnitten eine nasenartige Form aufweisen und im Bereich der der genannten Stirnseite des hohlen Körpers benachbart angeordnete Stirnseite der Formteile (216) vorgesehen sind.

16. Matrize nach einem der Ansprüche 13 bis 15,
**dadurch gekennzeichnet,**
**daß** die Formteile (216) in ihren der genannten Stirnseite des hohlen Körpers benachbarten Stirnseiten mit Formmerkmalen, insbesondere sich radial und schräg erstreckende Nuten (331) und dazwischen liegenden Nasen (333) versehen sind, die insbesondere der Ausbildung einer Verdrehsicherung zwischen einem Funktionselement (210) und einem Blechteil (212) bei der Anwendung der Matrize (214) dienen.

17. Matrize nach einem der Ansprüche 13 bis 16,
**dadurch gekennzeichnet,**
**daß** jedes Formteil (216) auswechselbar ausgebildet ist.

18. Matrize nach einem der Ansprüche 13 bis 15,
**dadurch gekennzeichnet,**
**daß** das Anschlagelement (234) einen den Formteilen zugewandten zylindrischen Bereich (214b) aufweist, auf dem die Formteile (216) anschlagen.

19. Matrize nach Anspruch 18,
**gekennzeichnet durch**,
ein elastisches Rückstellelement (228), das das Anschlagelement (234) in Richtung der genannten Stirnseite des hohlen Körpers (215) gegen eine Ringschulter dieses Körpers vorspannt.

20. Matrize nach einem der vorhergehenden Ansprüche 13 bis 19,
**dadurch gekennzeichnet,**
**daß** die Formteile (216) jeweilige, sich in Längsrichtung der Matrize (214) erstreckende Ausnehmungen (288) aufweisen, in denen im hohlen Körper der Matrize fest angeordnete Stifte (284) hineinragen und die Formteile (216) gegen vollständige Herausnahme aus der Matrize bei ihrer Bewegung bei der Freigabe des Blechteils mit angebrachtem Funktionselement sichern.

21. Matrize nach Anspruch 20,
**dadurch gekennzeichnet,**
**daß** die axiale Länge der Ausnehmungen (288) abzüglich der axialen Höhe der Stifte (286) zumindest im wesentlichen dem maximal vorgesehenen Hub der Formteile (216) in axialer Richtung der Matrize (214) bei der Freigabe des Blechteils entspricht und eine entsprechende Schwenkbewegung der Formteile (216) zuläßt.

22. Matrize nach Anspruch 20 oder 21,
**dadurch gekennzeichnet,**
**daß** die Breite der Ausnehmungen (288) quer zu deren axialer Richtung dem Durchmesser der in diesen eindringenden Stifte (286) entspricht.

23. Funktionselement zur insbesondere, jedoch nicht ausschließlichen flüssigkeits- und/oder gasdichten Anbringung an einem Blechteil, gemäß einem Verfahren nach einem der Ansprüche 1 bis 12 und/oder unter Anwendung einer Matrize nach einem der Ansprüche 13 bis 22,
das Funktionselement (210) aus einem Schaftteil (210b) und einem für eine Nietverbindung mit einem Tafelelement, insbesondere einem Blechteil (212) ausgelegtem Kopfteil (210a) besteht, daß mindestens das Kopfteil (210a) hohl ausgebildet ist und vorzugsweise zumindest im wesentlichen den gleichen Außendurchmesser wie das Schaftteil (210b) aufweist
**dadurch gekennzeichnet,**
**dass** das hohle Kopfteil (210a) an seinem dem Schaftteil abgewandten Stirnende eine im wesentlichen teilsphärische Abrundung (268) aufweist, die in einer im wesentlichen kreisförmigen stirnseitigen Öffnung (270) endet, welche vorzugsweise in einer Ebene senkrecht zur Längsachse (236) des Funktionselementes angeordnet ist.

24. Funktionselement nach Anspruch 23,
**dadurch gekennzeichnet,**
**daß** das offene Stirnende (271) des Elementes gerundet ist, um das Bauteil bzw. das Blechteil nicht zu verletzen.

25. Funktionselement nach Anspruch 23 oder 24,
**dadurch gekennzeichnet,**
**daß** die zylindrische Seitenwand des Kopfteils (210a) des Funktionselementes stauchbar ausgebildet ist, damit bei der Anbringung des Funktionselementes die Wandung zur Ausbildung einer Hinterschneidung (326) in zwei von einander beabstandeten, radial nach außen vorspringenden Ringwülsten oder Ringfalzen (320 und 322) verformbar ist.

26. Funktionselement nach einem der vorhergehenden Ansprüche,
**dadurch gekennzeichnet,**
**daß** die stirnseitige Öffnung (270) mit einer sich in Richtung des Schaftteils (210b) konusförmig verjüngenden Wand versehen ist, deren eingeschlossener Winkel im Bereich zwischen 30° und 120° vorzugsweise zwischen 45° und 90° liegt.

27. Funktionselement nach einem der vorhergehenden Ansprüche 23 bis 26
**dadurch gekennzeichnet,**
**daß** es als Bolzenelement realisiert ist.

28. Funktionselement nach einem der vorhergehenden Ansprüche 23 bis 26
**dadurch gekennzeichnet,**
**daß** es als Mutterelement realisiert ist.

29. Funktionselement nach einem der vorhergehenden Ansprüche 23 bis 28,
**dadurch gekennzeichnet,**
**daß** es aus einem Rohrprofil durch Hochdruckumformen hergestellt worden ist.

30. Funktionselement nach einem der vorhergehenden Ansprüche 23 bis 28,
**dadurch gekennzeichnet,**
**daß** es aus einem Rohrprofil oder aus Draht- oder Stangenmaterial durch ein Kaltschlagverfahren hergestellt ist.

31. Zusammenbauteil aus wenigstens einem Blechteil (212) und zumindest einem Funktionselement (210) nach einem der Ansprüche 23 bis 29, welches gemäß einem Verfahren nach einem der Ansprüche 1 bis 12 und/oder unter Verwendung einer Matrize (214) nach einem der Ansprüche 13 bis 22 hergestellt ist, **dadurch gekennzeichnet,**
**daß** ein hohles Kopfteil (210a) des Funktionselementes (210) verformt ist, um zwei radial nach außen vorspringenden, voneinander beabstandeten Ringwülste (320, 322) zu bilden, zwischen denen eine Hinterschneidung (324) vorliegt, in der das Blechmaterial formschlüssig aufgenommen ist und das Blechteil (212) in die Hinterschneidung (324) des Funktionselementes (210) hinein erstreckt.

32. Zusammenbauteil nach Anspruch 31,
**dadurch gekennzeichnet,**
**daß** das Blechteil (212) zumindest im Bereich des Funktionselementes (210), d.h. der Fügeverbindung mit dem Funktionselement (210) nicht perforiert und nicht gelocht ist.

33. Zusammenbauteil nach Anspruch 31 oder 32,
**dadurch gekennzeichnet,**
**daß** bei Verwendung eines eine beschichtete Oberfläche aufweisenden Blechteils (212) diese Oberfläche zumindest auf der dem Funktionselement (210) gegenüberliegenden Seite durch das Anbringen des Funktionselementes (210) an dem Blechteil (212) nicht beschädigt ist.

34. Zusammenbauteil nach einem der Ansprüche 31 bis 33,
**dadurch gekennzeichnet,**
**daß** das Kopfteil (210a) des Funktionselementes (210), zumindest teilweise in einer topfartigen Vertiefung des Blechteils (212) angeordnet ist.

35. Zusammenbauteil nach einem der vorhergehenden Ansprüche 31 bis 34,
**dadurch gekennzeichnet, daß** das Kopfteil bis auf der dem Schaftteil (210b) zugewandten Fläche vom Blechteil vollständig umschlossen ist.

36. Zusammenbauteil nach einem der vorhergehenden Ansprüche 31 bis 35,
**dadurch gekennzeichnet,**
**daß** das Blechmaterial des Blechteils, das in die Hinterschneidung (329) hineinragt, als Ringfalz bzw. Ringwulst (326) ausgebildet wird.

37. Zusammenbauteil nach einem der vorhergehenden Ansprüche 31 bis 36,
**dadurch gekennzeichnet,**
**daß** dem Bodenbereich des topfartig umgeformten Blechteils (212) eine konvexe, dem Schaftteil des Funktionselements zugewandte Form (212b) aufweist.

38. Zusammenbauteil nach einem der vorhergehenden Ansprüche 31 bis 37,
**dadurch gekennzeichnet,**
**daß** der dem Bodenbereich zugewandte Ringfalz (322) des Kopfteils (210a) des Funktionselements (210) in den Eckbereich der topfartigen Vertiefung des Blechteils (212) hineingeformt ist, die zwischen dem Bodenbereich und der Seitenwand der topfartigen Vertiefung ausgebildet ist.

39. Zusammenbauteil nach einem der vorhergehenden Ansprüche 31 bis 38,
**dadurch gekennzeichnet, daß** das Blechteil im Bereich wo die topfartige Vertiefung in die allgemeine Ebene des Blechteils (212) übergeht sich in radialer Richtung erstreckende, schräge voneinander beabstandeten Nasen (334) aufweist, die auf der dem Blechteil zugewandter Seite Hohlkehlen bilden und daß der obere Ringwulst (320) entsprechende Nasen aufweist, die innerhalb der Hohlkehlen der Nasen (334) des Blechteils zur Verdrehsicherung formschlüssig eingreifen

40. Stempelanordnung in Verbindung mit einer Matrize nach einem der Ansprüche 13 bis 22 zur Anwendung mit einem Funktionselement (210) mit einem Formmerkmale aufweisenden Schaftteil (210b) und einem Kopfteil (210a), insbesondere ein Funktionselement nach einem der Ansprüche 23 bis 30,
**gekennzeichnet durch**
- einen Außenstempel (403),
- einen Innenstempel (404), der innerhalb eines Stempelkanals (402) des Außenstempels (403) in Bezug auf den Außenstempel zwischen einer Aufnahmeposition für das Funktionselement (210) und einer Einsetzposition für das Funktionselement (210) verschiebbar angeordnet ist, wobei in der Aufnahmeposition das Funktionselement vorzugsweise von der Seite in den Stempelkanal (402) einführbar ist und in der Einsetzposition das Kopfteil (210a) des Funktionselements aus der Stempelanordnung (400) herausragt und
- **durch** mindestens zwei vom Außenstempel getragenen Segmente (426) die an einer inneren Seite (430) vorzugsweise Formmerkmale (432) aufweisen, die in die Formmerkmale des Schaftteils (210b) des Funktionselements eingreifen können und welche zwischen eine geöffnete Position entfernt vom Schaftteil (210b) des Funktionselements und eine geschlossene Position in Eingriff mit den Formmerkmalen des Schaftteils (210b) bewegbar sind.

41. Stempelanordnung nach Anspruch 40,
**dadurch gekennzeichnet, daß** der Außenstempel einen oberen Teil (414) und einen unteren, am oberen Teil befestigten Teil (412) aufweist, wobei eine konusförmige, konzentrisch zur Längsachse (405) der Matrize angeordnete Vertiefung (420) im unteren Teil (412) vorgesehen ist und die Segmente (426) entsprechende konusförmige Flächen (442) aufweisen, daß die Segmente durch jeweilige federvorgespannte, vorzugsweise schräg zur Langsachse (405) der Stempelanordnung gestellten Stößel (448) nach oben in Richtung des oberen Teils (414) gegen diesen vorgespannt sind und in dieser Position mit ihren Formmerkmalen (432) in denen (211) des unter dem Druck des Innenstempels (404) vorgedrängten Funktionselements (210) eingreifen können und daß mittels einer auf das Funktionselement ausgeübten, dieses aus dem Stempelkanal und den Segmenten herausziehenden Zugkraft die Stößel (448) zurück verdrängt werden können und sich gegen die konusförmige Vertiefung (420)des unteren Teils und dabei in die geöffnete Position zur Freigabe des Funktionselements bewegen.

42. Stempelanordnung nach Anspruch 41,
**dadurch gekennzeichnet, daß** der obere Teil (414) des Außenstempels (403) zur Zentrierung der Segmente eine konusförmige Vertiefung (422) aufweist, die ebenfalls konzentrisch zur Längsachse (405) der Matrize angeordnet ist und daß die Segmente (426) weitere konusförmige Flächen (438) aufweisen, die mit dieser (422) in der geschlossenen Position in Eingriff gelangen.

## Claims

1. A method for the attachment, in particular for the liquid-tight and/or gas-tight attachment, of a functional element (210), in particular a fastener element, to a sheet metal part (212), wherein the functional element (210) provided with a hollow head part (210a) is pressed against the sheet metal part (212) supported by a die (214) **characterised in that**, with a simultaneous deformation of the hollow head part (210a) and a reforming of the sheet metal part (212) into a reforming space (230) defined by shaped parts (216) of the die, the sheet metal material is formed into an undercut (324) made by deformation of the head part (210a), with the shaped parts being immovably held during the reforming, but being partly lifted out of the die for the removal of the functional element attached to the sheet metal part.

2. A method in accordance with claim 1, **characterized in that** sheet metal material is brought into engagement with shaped features (231, 233), in particular of groove-like and/or rib-like shape, formed at the end of the shaped parts (216) adjacent to the sheet metal material by the press force applied to the functional element (210) during the reforming, and **in that** both the sheet metal part (212) and the region of the head part (210a) above it are deformed thereby to form a security against rotation.

3. A method in accordance with claim 1 or claim 2, **characterized in that** the sheet metal material is first pressed into the undercut (324) and preferably brought into engagement with the shaped features forming the security against rotation after the sheet metal part (212) has been at least partly formed into the reforming space (230) by the functional element (210) moved in the direction of a longitudinal axis (222) of the die (214) for the attachment to the sheet metal part and has, in particular, been provided with a collar-like or pot-like recess.

4. A method in accordance with at least one of the preceding claims, **characterized in that** the sheet metal part (212) is not perforated, i.e. is not pierced, at least in the region of the functional element (210) during its attachment to the sheet metal part (212).

5. A method in accordance with at least one of the claims 1 to 3, **characterized in that** a pre-pierced sheet metal part is used at the point of the attachment of the hollow head part (210a) of the functional element (210), with the opening being substantially smaller in diameter than the outer diameter of the hollow head part (210a).

6. A method in accordance with at least one of the preceding claims, **characterized in that** the shaped parts (216) are arranged in segment-like manner around an abutment element (234), which has a dome-like projection (234c), to form the reforming space (230), with the deformation of the cigar-shaped end of the hollow head part (210a) of the functional element being partly carried out by means of this projection (234c).

7. A method in accordance with at least one of the preceding claims, **characterized in that** the shaped parts (216) are partly lifted out of a conical seat of the die (214) and pivoted radially outwardly to release the component assembly comprising the sheet metal part (212) and the functional element (210).

8. A method in accordance with any one of the preceding claims, **characterized in that**, in the deformation of the hollow head part (210a) of the functional element, this is reformed into two annular folds or annular bulges (320 and 322) spaced from one another by the undercut (324).

9. A method in accordance with claim 8, **characterized in that** the sheet metal material of the sheet metal part, which protrudes into the undercut (324), is also formed as an annular fold or annular bulge (326).

10. A method in accordance with claim 9, **characterized in that** the sheet metal material of the sheet metal part, which is reformed into a pot-like shape, surrounds the deformed head part (210a) of the functional element (210).

11. A method in accordance with claim 10, **characterized in that** the base region of the sheet metal part (212) reformed into a pot-like shape is given a convex shape facing towards the shaft part of the functional element.

12. A method in accordance with claim 10 or claim 11, **characterized in that** the annular fold (322) of the head part (210a) of the functional element (210) adjacent to the base region is reformed into the corner region of the pot-like recess of the sheet metal part (212) which is formed between the base region and the side wall of the pot-like recess.

13. A die (214), in particular for use in a method in accordance with any one of the preceding claims, having a hollow body (215) with an end face (296) which is provided to support a sheet metal part and which merges via a conically tapering wall (226) into a space (227) receiving an abutment element (234), with the abutment element being spaced from the conically tapering wall to form an annular gap of wedge-shaped cross-section and with the end face of the abutment element adjacent to the end face of the hollow body being set back from the end of the hollow body and having a dome-like projection (234c) surrounded by an annular surface (234d), and further having several, preferably from two to eight, in particular four, shaped parts (216) preferably of the same design, which are arranged around a longitudinal axis (222) of the die (214) in the wedge-shaped annular gap and are supported both at the conical wall (226) and at the abutment element (234), as well as having a reforming space (230) which is formed between the shaped parts (216) and the set-back end of the abutment element and into which shaped projections (220) of the shaped parts (216) project.

14. A die in accordance with claim 13, **characterized in that** each shaped part (216) is arranged in segment-like manner, like wedges of cake around the longitudinal axis (222) of the die (214), around the abutment element (234) of the die (214).

15. A die in accordance with claim 13 or claim 14, **characterized in that** the shaped projections (220) of the shaped parts (216) have a nose-like shape when cut in a longitudinal plane of the die and are provided in the region of the end face of the shaped parts (216) arranged adjacent to the said end face of the hollow body.

16. A die in accordance with at least one of the claims 13 to 15, **characterized in that** the shaped parts (216) are provided in their end faces adjacent to the above-named end faces of the hollow body with shaped features, in particular with radially and obliquely extending grooves (331) and noses (333) lying therebetween, which serve in particular for the formation of a security against rotation between a functional element (210) and a sheet metal part (212) when the die (214) is used.

17. A die in accordance with any one of the claims 13 to 16, **characterized in that** each shaped part (216) is designed to be replaceable.

18. A die in accordance with one of the claims 13 to 15, **characterized in that** the abutment element (234) has a cylindrical region adjacent to the shaped parts against which the shaped parts (216) abut.

19. A die in accordance with claim 18, **characterized by** an elastic resetting element (228) which biases the abutment element (234) in the direction of the said end face of the hollow body (215) against an annular shoulder of this body.

20. A die in accordance with any one of the preceding claims 13 to 19, **characterized in that** the shaped parts (216) each have recesses (288) extending in the longitudinal direction of the die (214) into which pins (284) fixedly arranged in the hollow body of the die project and secure the shaped parts (216) against complete removal from the die during their movement for the release of the sheet metal part with an attached functional element.

21. A die in accordance with claim 20, **characterized in that** the axial length of the recesses (288) less the axial height of the pins (286) at least substantially corresponds to the maximally provided stroke of the shaped parts (216) in the axial direction of the die (214) for the release of the sheet metal part and permits a corresponding pivotal movement of the shaped parts (216).

22. A die in accordance with claim 20 or claim 21, **characterized in that** the width of the recesses (288) transverse to their axial direction corresponds to the diameter of the pins (286) penetrating into these.

23. A functional element for attachment, in particular, but not exclusively, for attachment in a liquid-tight or gas-tight manner, to a sheet metal part, in accordance with a method in accordance with any one of the claims 1 to 12 and/or using a die in accordance with one of the claims 13 to 22, the functional element 210 comprising a shaft part (210b) and a head part (210a) designed for a riveted joint to a panel member, in particular to a sheet metal part (212), with at least the head part (210a) being made hollow and preferably having at least substantially the same outer diameter as the shaft part (210b) **characterised in that** the hollow head part (210a) has a preferably at least substantially partly spherical rounded shape (268) at its end remote from the shaft part, with said rounded shape ending in particular in an at least substantially circular aperture (270) at the end face which is preferably arranged in a plane perpendicular to the longitudinal axis (236) of the functional element.

24. A functional element in accordance with claim 23, **characterized in that** the open end face (271) of the element is rounded so as not to damage the component or the sheet metal part.

25. A functional element in accordance with claim 23 or claim 24, **characterized in that** the cylindrical side wall of the head part (210a) of the functional element is made compressible, so that when the functional element is being attached, the wall can be deformed into two radially outwardly projecting annular bulges or annular folds (320 and 322) spaced from one another to form an undercut (326).

26. A functional element in accordance with any one of the preceding claims, **characterized in that** the end face aperture (270) is provided with a wall tapering conically in the direction of the shaft part (210b) with the included angle of the wall being in the region between 30° and 120°, preferably between 45° and 90°.

27. A functional element in accordance with any one of the preceding claims 23 to 26, **characterized in that** it is realized as a bolt element.

28. A functional element in accordance with any one of the preceding claims 23 to 26, **characterized in that** it is realized as a nut element.

29. A functional element in accordance with any one of the preceding claims 23 to 28, **characterized in that** it has been manufactured from a tube section by high-pressure forming.

30. A functional element in accordance with any one of the preceding claims 23 to 28, **characterized in that** it is manufactured from a tube section or from wire material or bar stock by a cold forming process.

31. A component assembly comprising at least one sheet metal part (212) and at least one functional element (210) in accordance with one of the claims 23 to 29, which is manufactured in accordance with a method in accordance with one of the claims 1 to 12 and/or using a die (214) in accordance with one of the claims 13 to 22, **characterized in that** a hollow head part (210a) of the functional element (210) is deformed to form two annular bulges (320, 322) projecting radially outwardly and spaced from one another and between which an undercut (324) is present in which the sheet metal material is received in a form-locked manner and **in that** the sheet metal part (212) extends into the undercut (324) of the functional element (210).

32. A component assembly in accordance with claim 31, **characterized in that** the sheet metal part (212) is not perforated and not pierced, at least in the region of the functional element (210), i.e. of the joint to the functional element (210).

33. A component assembly in accordance with claim 31 or claim 32, **characterized in that** when a sheet metal part (212) having a coated surface is used, said surface is not damaged, at least at the side opposite the functional element (210), by the attaching of the functional element (210) to the sheet metal part (212).

34. A component assembly in accordance with at least one of the claims 31 to 33, **characterized in that** the head part (210a) of the functional element (210) is at least partly arranged in a pot-like recess of the sheet metal part (212).

35. A component assembly in accordance with any one of the preceding claims 31 to 34, **characterized in that** the head part is fully surrounded by the sheet metal part with the exception of the area adjacent to the shaft part (210b).

36. A component assembly in accordance with any one of the preceding claims 31 to 35, **characterized in that** the sheet metal material of the sheet metal part that protrudes into the undercut (329) is formed as an annular fold or an annular bulge (326).

37. A component assembly in accordance with any one of the preceding claims 31 to 36, **characterized in that** the base region of the sheet metal part (212) formed in a pot-like manner has a convex shape (212b) facing towards the shaft part of the functional element.

38. A component assembly in accordance with any one of the preceding claims 31 to 37, **characterized in that** the annular fold (322) of the head part (210a) of the functional element (210) adjacent to the base region is reformed into the corner region of the pot-like recess of the sheet metal part (212) which is being formed between the base region and the side wall of the pot-like recess.

39. A component assembly in accordance with any one of the preceding claims 31 to 38, **characterized in that** the sheet metal part has oblique noses (334) extending in the radial direction and spaced from one another in the region where the pot-like recess merges into the general plane of the sheet metal part (212), with said noses (334) forming channels on the side adjacent to the sheet metal part, and **in that** the upper annular bulge (320) has corresponding noses which engage insiwde the channels of the noses (334) of the sheet metal part in a form-locked manner for the security against rotation.

40. A plunger arrangement for use with a functional element (210) with a shaft part (210b) having shaped features and with a head part (210a), in particular a functional element in accordance with any one of the claims 23 to 30, **characterized by**
- an outer plunger (403);
- an inner plunger (404) which is displaceably arranged with respect to the outer plunger within a plunger passage (402) of the outer plunger between a receiving position for the functional element (210) and an insertion position for the functional element (210), with the functional element (210) being able to be inserted into the plunger passage (402), preferably from the side, when in the receiving position, and with the head part (210a) of the functional element projecting out of the plunger arrangement (400) when in the insertion position; and
- by at least two segments (426) supported by the outer plunger which preferably have shaped features (432) at an inner side (430) which can engage into the shaped features of the shaft part (210b) of the functional element and which are movable between an open position remote from the shaft part (210b) of the functional element and a closed position in engagement with the shaped features of the shaft part (210b).

41. A plunger arrangement in accordance with claim 40, **characterized in that** the outer plunger has an upper part (414) and a lower part (412) fixed to the upper part, with a conical recess (420) arranged concentrically to the longitudinal axis (405) of the die being provided in the lower part (412) and the segments (426) having corresponding conical areas (442); **in that** the segments are upwardly biased in the direction of the upper part (414), against said upper part (414), by spring-biased tappets (448) preferably set obliquely to the longitudinal axis (405) of the plunger arrangement, with their shaped features (432) in this position being able to engage in those (211) of the functional element (210) urged forward under the pressure of the inner plunger (404); and **in that** the tappets (448) can be forced back by means of a drawing force exerted on the functional element and drawing it out of the plunger passage and the segments and can move against the conical recess (420) of the lower part and thus into the open position to release the functional element.

42. A plunger arrangement in accordance with claim 41, **characterized in that** the upper part (414) of the outer plunger (403) has a conical recess (422) to center the segments, which is likewise arranged concentrically to the longitudinal axis (405) of the die, and **in that** the segments (426) have further conical faces (438) which come into engagement with the conical recess (422) in the closed position.

## Revendications

1. Procédé pour monter un élément fonctionnel (210), en particulier un élément de fixation, sur une pièce de tôle (212), en particulier de manière étanche aux liquides et/ou au gaz, dans lequel l'élément fonctionnel (210) pourvu d'une partie de tête (210a) creuse est pressé contre la pièce de tôle (212) soutenue par une matrice (214), **caractérisé en ce qu'**en déformant la partie de tête (210a) creuse et en façonnant simultanément la pièce de tôle (212) dans une chambre de formage (230) cylindrique définie par des pièces conformées (216) de la matrice et présentant un fond, le matériau de la pièce de tôle est formé en pénétration dans une contre-dépouille (324) réalisée par déformation de la partie de tête (210a), les pièces conformées étant maintenues immobiles lors du façonnage mais étant soulevées partiellement hors de la matrice pour extraire l'élément fonctionnel monté sur la tôle.

2. Procédé selon la revendication 1, **caractérisé en ce que** le matériau de la pièce de tôle est mis en engagement par la force de pressage exercée sur l'élément fonctionnel (210) lors du façonnage avec des configurations de façonnage (231, 233), en particulier en forme de gorges et/ou de nervures, réalisées sur les faces frontales des pièces conformées (216) tournées vers le matériau de la pièce de tôle, et **en ce que** grâce à cela, tant la pièce de tôle (212) que la région de la partie de tête (210a) située au-dessus de celle-ci sont déformées pour réaliser une sécurité antirotation.

3. Procédé selon l'une ou l'autre des revendications 1 et 2, **caractérisé en ce que** le matériau de la pièce de tôle est d'abord pressé dans la contre-dépouille (324) et de préférence amené en engagement avec les configurations de façonnage formant la sécurité antirotation après que la pièce de tôle (212) a été façonnée au moins partiellement dans la chambre de formage (230) par l'élément fonctionnel (210) déplacé en direction d'un axe longitudinal (222) de la matrice (214) pour le monter sur la pièce de tôle, et en particulier en étant pourvue d'un renfoncement approximativement en forme de col ou de pot.

4. Procédé selon l'une des revendications précédentes, **caractérisé en ce qu'**au moins dans la région de l'élément fonctionnel (210), lorsqu'il est monté sur la pièce de tôle (212), la pièce de tôle (212) n'est pas perforée, c'est-à-dire qu'elle n'est pas percée.

5. Procédé selon l'une des revendications 1 à 3, **caractérisé en ce qu'**à la place du montage de la partie de tête (210a) creuse de l'élément fonctionnel (210), on utilise une pièce de tôle prépercée, le trou ayant un diamètre nettement plus petit que le diamètre extérieur de la partie de tête (210a) creuse.

6. Procédé selon l'une des revendications précédentes, **caractérisé en ce que** pour former la chambre de formage (230), les pièces conformées (216) sont agencées à la manière de segments autour d'un élément de butée (234) qui présente une saillie (234c) en forme de dôme, la déformation de l'extrémité en forme de cigare de la partie de tête (210a) creuse de l'élément fonctionnel étant effectuée en partie au moyen de cette saillie (234c).

7. Procédé selon l'une des revendications précédentes, **caractérisé en ce que** pour libérer la pièce d'assemblage constituée par la pièce de tôle (212) et par l'élément fonctionnel (210), les pièces conformées (216) sont extraites partiellement hors d'un logement conique de la matrice (214) et sont pivotées en partie radialement vers l'extérieur.

8. Procédé selon l'une des revendications précédentes, **caractérisé en ce que** lors de la déformation de la partie de tête (210a) creuse de l'élément fonctionnel, celle-ci est façonnée en deux pliures annulaires ou bourrelets annulaires (320 et 322), respectivement, espacé(e)s l'une/l'un de l'autre par la contre-dépouille (324).

9. Procédé selon la revendication 8, **caractérisé en ce que** le matériau de la pièce de tôle qui fait saillie dans la contre-dépouille (324) est également réalisé sous forme de pliure annulaire ou de bourrelet annulaire (326), respectivement.

10. Procédé selon la revendication 9, **caractérisé en ce que** le matériau de la pièce de tôle qui est façonné en un élément en forme de pot, entoure la partie de tête (210a) déformée de l'élément fonctionnel (210).

11. Procédé selon la revendication 10, **caractérisé en ce que** l'on confère à la région de fond de la pièce de tôle (212) façonnée en forme de pot une forme convexe tournée vers la partie de tige de l'élément fonctionnel.

12. Procédé selon l'une ou l'autre des revendications 10 et 11, **caractérisé en ce que** la pliure annulaire (322), tournée vers la région de fond, de la partie de tête (210a) de l'élément fonctionnel (210) est formée en pénétration dans la région en coin du renfoncement en forme de pot de la pièce de tôle (212), lequel est réalisé entre la région de fond et la paroi latérale du renfoncement en forme de pot.

13. Matrice (214) destinée à être utilisée dans un procédé selon l'une des revendications précédentes, comportant un corps creux (215) avec une face frontale (296) prévue pour soutenir une pièce de tôle et qui se transforme, par l'intermédiaire d'une paroi (226) se rétrécissant sous forme conique, en un espace (227) recevant un élément de butée (234), l'élément de butée étant espacé de la paroi se rétrécissant en forme de cône, pour former une fente annulaire cunéiforme en section transversale, et la face frontale de l'élément de butée, qui est tournée vers la face frontale du corps creux, étant en retrait depuis la face frontale du corps creux et présentant une saillie (234c) en forme de dôme entourée par une surface annulaire (234d), et comportant en outre plusieurs pièces conformées (216) de préférence de même construction, de préférence au nombre de deux à huit, en particulier quatre, qui sont agencées dans la fente annulaire cunéiforme autour de l'axe longitudinal (222) de la matrice (214) et qui sont soutenues tant sur la paroi (226) de forme conique que sur l'élément de butée (234), ainsi que comportant une chambre de formage (230) formée entre les pièces conformées (216) et l'extrémité frontale en retrait de l'élément de butée et dans laquelle font saillie des saillies conformées (220) de la pièce conformée (216).

14. Matrice selon la revendication 13, **caractérisé en ce que** les pièces conformées (216) sont chacune agencées sous forme de segments à la manière de parts de gâteaux autour de l'axe longitudinal (222) de la matrice (214) tout autour de l'élément de butée (234) de la matrice (214).

15. Matrice selon l'une ou l'autre des revendications 13 et 14, **caractérisé en ce que** les saillies moulées (220) des pièces conformées (216) présentent, en coupe dans un plan longitudinal de la matrice, une forme d'ergot et sont prévues dans la région de la face frontale des pièces conformées (216) agencée au voisinage de ladite face frontale du corps creux.

16. Matrice selon l'une des revendications 13 à 15, **caractérisé en ce que** les pièces conformées (216) sont pourvues de configurations de façonnage dans leurs faces frontales voisines de ladite face frontale du corps creux, en particulier de gorges (331) s'étendant radialement et en biais, et d'ergots (333) situés entre celles-ci, qui servent en particulier à la réalisation d'une sécurité antirotation entre un élément fonctionnel (210) et une pièce de tôle (212) lors de l'utilisation de la matrice (214).

17. Matrice selon l'une des revendications 13 à 16, **caractérisé en ce que** chaque pièce conformée (216) est réalisée interchangeable.

18. Matrice selon l'une des revendications 13 à 15, **caractérisé en ce que** l'élément de butée (234) présente une région cylindrique (214b) tournée vers les pièces conformées, sur laquelle viennent buter les pièces conformées (216).

19. Matrice selon la revendication 18, **caractérisé par** un élément de rappel (228) qui précontraint l'élément de butée (234) en direction de ladite face frontale du corps creux (215) contre un épaulement annulaire de ce corps.

20. Matrice selon l'une des revendications précédentes 13 à 19, **caractérisé en ce que** les pièces conformées (216) présentent des évidements (288) respectifs qui s'étendent en direction longitudinale de la matrice (214), dans lesquels des goupilles (284) agencées de manière solidaire dans le corps creux de la matrice font saillie et assurent les pièces conformées (216) à l'encontre d'une extraction totale hors de la matrice pendant de leur mouvement lors de la libération de la pièce de tôle avec l'élément fonctionnel monté.

21. Matrice selon la revendication 20, **caractérisé en ce que** la longueur axiale des évidements (288), déduction faite de la hauteur axiale des goupilles (286), correspond au moins sensiblement à la course maximale prévue des pièces conformées (216) en direction axiale de la matrice (214) lors de la libération de la pièce de tôle et permet un mouvement de pivotement correspondant des pièces conformées (216).

22. Matrice selon l'une ou l'autre des revendications 20 et 21, **caractérisé en ce que** la largeur des évidements (288) transversalement à leur direction axiale correspond au diamètre des goupilles (286) pénétrant dans ceux-ci.

23. Elément fonctionnel destiné à être monté sur une pièce de tôle, en particulier mais non exclusivement de manière étanche aux liquides et/ou au gaz, selon un procédé selon l'une des revendications 1 à 12 et/ou en utilisant une matrice selon l'une des revendications 13 à 22, l'élément fonctionnel (210) étant constitué par une partie de tige (210b) et par une partie de tête (210a) conçue pour une liaison rivetée avec un élément en forme de plaque, en particulier une pièce de tôle (212), au moins la partie de tête (210b) étant réalisée creuse et présentant de préférence au moins le même diamètre extérieur que la partie de tige (210b), **caractérisé en ce que** la partie de tête (210a) creuse présente sur son extrémité frontale détournée de la partie de tige un arrondi (268) sensiblement partiellement sphérique qui se termine par une ouverture (270) frontale sensiblement circulaire qui est agencée de préférence dans un plan perpendiculairement à axe longitudinal (236) de l'élément fonctionnel.

24. Elément fonctionnel selon la revendication 23, **caractérisé en ce que** l'extrémité frontale (271) ouverte de l'élément est arrondie pour ne pas blesser le composant ou la pièce de tôle.

25. Elément fonctionnel selon l'une ou l'autre des revendications 23 et 24, **caractérisé en ce que** la paroi latérale cylindrique de la partie de tête (210a) de l'élément fonctionnel est réalisée de manière à pouvoir être refoulée afin que lors du montage de l'élément fonctionnel, la paroi puisse être déformée pour réaliser une contre-dépouille (326) en deux pliures annulaires ou bourrelets annulaires (320 et 322) espacé(e)s l'une/l'un de l'autre et faisant saillie radialement vers l'extérieur.

26. Elément fonctionnel selon l'une des revendications précédentes, **caractérisé en ce que** l'ouverture (270) côté frontal est pourvue d'une paroi se rétrécissant en forme conique en direction de la partie de tige (210b) dont l'angle qu'elle forme est entre 30° et 120°, de préférence entre 45° et 90°.

27. Elément fonctionnel selon l'une des revendications précédentes 23 à 26, **caractérisé en ce qu'**il est réalisé sous forme de boulon.

28. Elément fonctionnel selon l'une des revendications précédentes 23 à 26, **caractérisé en ce qu'**il est réalisé sous forme d'écrou.

29. Elément fonctionnel selon l'une des revendications précédentes 23 à 28, **caractérisé en ce qu'**il est fabriqué par formage sous haute pression à partir d'un profilé tubulaire.

30. Elément fonctionnel selon l'une des revendications précédentes 23 à 28, **caractérisé en ce qu'**il est fabriqué par un procédé de frappe à froid à partir d'un profilé tubulaire ou d'un matériau en fil ou en barre.

31. Pièce d'assemblage constituée par au moins une pièce de tôle (212) et au moins un élément fonctionnel (210) selon l'une des revendications 23 à 29, qui est fabriquée selon un procédé selon l'une des revendications 1 à 12 et/ou en utilisant une matrice (214) selon l'une des revendications 13 à 22, **caractérisée en ce qu'**une partie de tête (210a) creuse de l'élément fonctionnel (210) est déformée pour former deux bourrelets annulaires (320, 322) espacés l'un de l'autre et faisant saillie radialement vers l'extérieur, entre lesquels se trouve une contre-dépouille (324) dans laquelle le matériau de la pièce de tôle est reçu par coopération de formes et la pièce de tôle (212) s'étend jusque dans la contre-dépouille (324) de l'élément fonctionnel (210).

32. Pièce d'assemblage selon la revendication 31, **caractérisée en ce que** la pièce de tôle (212) n'est pas perforée et n'est pas percée au moins dans la région de l'élément fonctionnel (210), c'est-à-dire dans la région de la jointure avec l'élément fonctionnel (210).

33. Pièce d'assemblage selon l'une ou l'autre des revendications 31 et 32, **caractérisée en ce que** lorsqu'on utilise une pièce de tôle (212) présentant une surface revêtue, cette surface n'est pas endommagée au moins sur le côté opposé à l'élément fonctionnel (210) par le montage de l'élément fonctionnel (210) sur la pièce de tôle (212).

34. Pièce d'assemblage selon l'une des revendications précédentes 31 à 33, **caractérisée en ce que** la partie de tête (210a) de l'élément fonctionnel (210) est agencée au moins partiellement dans un renfoncement en forme de pot de la pièce de tôle (212).

35. Pièce d'assemblage selon l'une des revendications précédentes 31 à 34, **caractérisée en ce que** la partie de tête est totalement entourée par la pièce de tôle, excepté la surface tournée vers la partie de tige (210b).

36. Pièce d'assemblage selon l'une des revendications précédentes 31 à 35, **caractérisée en ce que** le matériau de la pièce de tôle qui fait saillie jusque dans la contre-dépouille (329) est réalisé sous forme de pliure annulaire ou de bourrelet annulaire (326).

37. Pièce d'assemblage selon l'une des revendications précédentes 31 à 36, **caractérisée en ce que** la région de fond de la pièce de tôle (212) façonnée en forme de pot présente une forme (212b) convexe tournée vers la partie de tige de l'élément fonctionnel.

38. Pièce d'assemblage selon l'une des revendications précédentes 31 à 37, **caractérisée en ce que** la pliure annulaire (322), tournée vers la région de fond, de la partie de tête (210a) de l'élément fonctionnel (210) est formée en pénétration dans la région en coin du renfoncement en forme de pot de la pièce de tôle (212), lequel est réalisé entre la région de fond et la paroi latérale du renfoncement en forme de pot.

39. Pièce d'assemblage selon l'une des revendications précédentes 31 à 38, **caractérisée en ce que** la pièce de tôle présente, dans la région dans laquelle le renfoncement en forme de pot se transforme dans le plan général de la pièce de tôle (212), des ergots (334) obliques, espacés les uns des autres et s'étendant en direction radiale, lesquels forment sur la face tournée vers la pièce de tôle des congés et **en ce que** le bourrelet annulaire supérieur (320) présente des ergots correspondants qui s'engagent par coopération de formes à l'intérieur des congés des ergots (334) de la pièce de tôle pour former la sécurité antirotation.

40. Agencement de poinçon en liaison avec une matrice selon l'une des revendications 13 à 22 pour être utilisé avec un élément fonctionnel (210) avec une partie de tige (210b) présentant des configurations de façonnage, et avec une partie de tête (210a), en particulier un élément fonctionnel selon l'une des revendications 23 à 30, **caractérisé par**
- un poinçon extérieur (403),
- un poinçon intérieur (404) qui est agencé à déplacement à l'intérieur d'un canal à poinçon (402) du poinçon extérieur (403) par rapport au poinçon extérieur entre une position de réception pour l'élément fonctionnel (210) et une position de mise en place pour l'élément fonctionnel (210), et dans la position de réception, l'élément fonctionnel peut être introduit de préférence depuis le côté dans le canal à poinçon (402), et dans la position de mise en place, la partie de tête (210a) de l'élément fonctionnel fait saillie hors de l'agencement de poinçon (400) et par
- au moins deux segments (426) portés par le poinçon extérieur, qui présentent sur un côté intérieur (430) de préférence des configurations de façonnage (432) qui peuvent s'engager dans les configurations de façonnage de la partie de tige (210b) de l'élément fonctionnel et qui peuvent être déplacés entre une position ouverte éloignée de la partie de tige (210b) de l'élément fonctionnel et une position fermée en engagement avec les configurations de façonnage de la partie de tige (210b).

41. Agencement de poinçon selon la revendication 40, **caractérisé en ce que** le poinçon extérieur présente une partie supérieure (414) et une partie inférieure (412) fixée sur la partie supérieure, un renfoncement (420) de forme conique, agencé de manière concentrique par rapport à l'axe longitudinal (405) de la matrice étant prévu dans la partie inférieure (412), et les segments (426) présentant des surfaces (442) correspondantes de forme conique, **en ce que** les segments sont précontraints vers le haut en direction de la partie supérieure (414) et contre celle-ci par des poussoirs (448) respectifs précontraints par ressorts, de préférence inclinés vers le haut par rapport à l'axe longitudinal (405) de l'agencement de poinçon, et dans cette position, ils peuvent s'engager avec leurs configurations de façonnage (432) dans celles (211) de l'élément fonctionnel (210) forcé en avant sous la pression du poinçon intérieur (404), et **en ce qu'**au moyen d'une force de traction exercée sur l'élément fonctionnel et extrayant celui-ci hors du canal de poinçon et des segments, les poussoirs (448) peuvent être repoussés et se déplacent contre le renfoncement (420) conique de la partie inférieure et ici jusque dans la position ouverte pour libérer l'élément fonctionnel.

42. Poinçon selon la revendication 41, **caractérisé en ce que** la partie supérieure (414) du poinçon extérieur (403) présente pour le centrage des segments un renfoncement (422) conique qui est également agencé de manière concentrique par rapport à l'axe longitudinal (405) de la matrice, et **en ce que** les segments (426) présentent d'autres surfaces coniques qui viennent en engagement avec le renfoncement (422) dans la position fermée.
